(19) Europäisches Patentamt
European Patent Office
Office européen des brevets

(11) EP 2 522 509 A2

(12) EUROPEAN PATENT APPLICATION

(43) Date of publication:
**14.11.2012 Bulletin 2012/46**

(21) Application number: **12167676.1**

(22) Date of filing: **11.05.2012**

(51) Int Cl.:
***B41C 1/04*** *(2006.01)* ***B41N 1/06*** *(2006.01)*
***B41N 1/12*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.05.2011 US 201161485495 P**

(71) Applicant: **E. I. du Pont de Nemours and Company**
**Wilmington, DE 19898 (US)**

(72) Inventors:
- **Adelman, Douglas, J.**
  **Wilmington, DE Delaware 19810 (US)**
- **Blankenbicker, Cara, L.**
  **Wilmington, DE Delaware 19808 (US)**
- **Davis, Andrew Patrick**
  **Wilmington, DE Delaware 19808 (US)**
- **Fones, Barbara Bobick**
  **Bear, DE Delaware 19701 (US)**
- **Lu, Helen Shin Min**
  **Wallingford, PA Pennsylvania 19086 (US)**
- **Wagman, Mark Elliott**
  **Wilmington, DE Delaware 19810 (US)**

(74) Representative: **de Bresser, Sara Jean**
**Dehns**
**St Bride's House**
**10 Salisbury Square**
**London EC4Y 8JD (GB)**

# (54) Printing form and process for preparing the printing form with curable composition having epoxy novolac resin

(57) The invention pertains to a printing form and a process for preparing the printing form from a curable composition that includes an epoxy novolac resin having an epoxide equivalent weight of 156 to 300 g/equivalent, and an amine curing agent selected from primary amines and secondary amines, the agent having an amine equivalent weight of less than or equal to 60 g/equivalent. The process includes applying the curable composition to a supporting substrate to form a layer, curing the layer at one or more temperatures in a temperature range, and engraving to form at least one cell in the cured layer. The process prepares printing forms, particularly gravure printing forms, having a cured resin composition layer that is engravable, resistant to solvent inks and to mechanical wear, and capable of printing gravure-quality images.

EP 2 522 509 A2

**Description**

BACKGROUND OF THE INVENTION

1. Field of the Invention

This invention pertains to a printing form and a process for preparing a printing form, and in particular, a process for preparing a gravure printing form in which one or more conventional metal layers are replaced by specified epoxy novolac resins.

2. Description of Related Art

Gravure printing is a method of printing in which the printing form prints from an image area, where the image area is depressed and consists of small recessed cups or wells to contain the ink or printing material, and the non-image area is the surface of the form. A gravure cylinder, for example, is essentially made by electroplating a copper layer onto a base roller, and then engraving the image composed of the small recessed cells or wells digitally by a diamond stylus or laser etching machine. The cylinder with engraved cells is then overplated with a very thin layer of chrome to impart durability during the printing process. Consequently, gravure printing forms are expensive and require considerable time and material to produce.

Replacing the electroplated copper and chrome layers with a polymer-based composition has been explored, for example, by Bressler et al. (U.S. Patent No. 5,694,852), Campbell and Belser (U.S. Patent Publication 2004/0221756), and Kellner and Sahl (UK Patent Application GB 2,071,574). However, a combination of several process and property requirements must be met for gravure printing forms having a polymer-based composition to succeed. For an economical process, a polymer-based coating needs to be applied to the cylinder easily ("coatability") and cured reasonably rapidly ("curability"), allowing a high-quality surface layer to be produced to the strict tolerances required for gravure engraving and printing with a minimal requirement for grinding and polishing. The surface layer needs to have a level of hardness that produces well defined print cell structure when engraved, without significant chipping or breaking ("engravability"). The surface layer also needs to possess excellent resistance to the solvents used in gravure printing inks and cleaning solutions ("durability-solvent resistance"). Also, the surface layer needs to resist the mechanical wear ("durability-mechanical wear") encountered during the printing process. e.g., wear from the scraping of the doctor blade, wear from any abrasive particles that may be in the ink, and wear from the surface onto which the image is printed. Further, in order for gravure printing forms having a polymer-based composition to replace conventional metal-covered gravure printing forms, the polymer-based printing forms should be capable of relatively long print runs and provide a consistent printed image for a minimum of 100,000 impressions, and in some embodiments at least 200,000 impressions.

As a consequence, there remains a need to identify specific compositions that can be used to produce, in an economical and environmentally-friendly manner, a printing form having a surface layer that exhibits the necessary combination of engravability, solvent resistance, mechanical wear resistance, and print quality.

SUMMARY OF THE INVENTION

The present invention provides a process for preparing a printing form including a) providing a composition including i) at least one epoxy novolac resin having an epoxide equivalent weight of 156 to 300 g/equivalent, and ii) an amine curing agent selected from primary amines and secondary amines, the agent having an amine equivalent weight of less than or equal to 60 g/equivalent. The process further includes b) applying the curable composition onto a supporting substrate, thereby forming a layer; c) curing the layer at one or more temperatures in a range of room temperature to about 250°C; and d) engraving at least one cell in the layer resulting from step c).

In accordance with another aspect of this invention there is provided a process for gravure printing with a printing form including a) preparing the printing form according to the process described above; b) applying a solvent ink to the at least one cell; and c) transferring ink from the cell to a printable substrate, wherein the cured layer swells K 10% based on weight of the layer.

In accordance with another aspect of this invention there is provided a printing form including a continuous print surface adjacent a supporting substrate, wherein the continuous print surface is a cured epoxy composition prepared from a curable composition comprising i) at least one epoxy novolac resin having an epoxide equivalent weight of about 156 to about 300 g/equivalent, and ii) an amine curing agent selected from primary amines and secondary amines, the agent having an amine equivalent weight of less than or equal to 60 g/equivalent.

DESCRIPTION OF THE PREFERRED EMBODIMENTS

In the context of this disclosure, a number of terms shall be utilized.

The term "epoxy novolac resin" means any of a group of epoxy resins created by the reaction of epichlorohydrin and novolac. The term "novolac" refers to any of the phenol-formaldehyde resins made with an excess of phenol in the reaction, and to any of the cresol-formaldehyde resins made with an excess of cresol in the reaction.

The term "gravure printing" means a process in which an image is created by engraving or etching one or more depressions in the surface of a printing form, the engraved or etched area is filled with ink, then the printing form transfers the ink image to a substrate, such as paper or another material. An individual engraved or etched depression is referred to as a "cell."

The term "printing form" means an object (e.g., in the form of a cylinder, block, or plate) used to apply ink onto a surface for printing.

The term "room temperature" or, equivalently "ambient temperature," has its ordinary meaning as known to those skilled in the art and may include temperatures within the range of about 16°C (60°F) to about 32°C (90°F).

The term "primary amine" means any of a class of organic compounds containing $-NH_2$ functional groups.

The term "secondary amine" means any of a class of organic compounds containing -NH-functional groups.

The term "solvent ink" means an ink that includes an organic solvent, typically the organic solvent is volatile, in contrast to water-based inks.

The term "curing" refers to hardening of a polymer material or resin by cross-linking of polymer chains, brought about by chemical additives, heat, ultraviolet radiation, or electron beam. Hardening occurs primarily by crosslinking of the polymer chains. But other interactions in the polymer material or resin, such as branching and linear chain extension, may also occur in relatively small degree compared to crosslinking of the polymer chains.

The term "curable composition" as used herein refers to the composition that is applied to a substrate and then cured. The curable composition contains at least a curable polymer material or resin and an amine curing agent, and can include additional components, for example, catalysts, reactive diluents, fillers, nanoparticles, flexibilizing components, resin modifiers, pigments, solvents and/or other additives.

The term "cured composition" as used herein refers to the composition that remains on the substrate after being applied and cured. The cured composition contains at least a curable polymer material or resin and an amine curing agent, and can include additional components, for example, catalysts, reactive diluents, fillers, nanoparticles, flexibilizing components, resin modifiers, pigments, and/or other additives, and traces of solvent (solvent is typically driven out during applying and/or curing). The cured composition may also be considered a cured layer, or engravable layer. In some instances the cured composition may be referred to as a cured layer of the curable composition.

The term "amine equivalent weight" means the molecular weight of the amine-group-containing molecule divided by the number of amine hydrogens in the molecule. For example: triethylenetetraamine ("TETA") has a molecular weight of 146 and 6 amine hydrogens, so its amine equivalent weight is 146/6 = 24 g/equiv.

The term "epoxide equivalent weight" (EEW) means the weight in grams that contains 1 gram equivalent of epoxide.

The term "epoxide" means an organic compound containing a reactive group that is an "epoxide group", and the term "epoxide group" means a group that results from the union of oxygen with two carbons that are joined as indicated

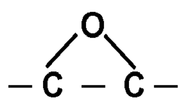

The term "nanoparticle" means a particle having at least one dimension less than about 500 nm.

The term "molecular weight" is the weighted average molecular weight, unless described otherwise in the specification.

Unless otherwise indicated herein, weight percent (wt%) of a component is based on the combined weight of the components, excluding solvents, of the curable composition.

The present invention includes a printing form having a print surface formed by curing a layer of a curable composition on a supporting substrate, a process for preparing the printing form from a curable composition, and particularly a process for preparing a gravure printing form from a curable composition. The curable composition includes i) an epoxy novolac resin having an epoxide equivalent weight of about 156 to about 300, and ii) an amine curing agent selected from primary amines and secondary amines, the agent having an amine equivalent weight of less than 60 g/equivalent. The claimed process facilitates the preparation of a printing form in considerably less time, at reduced cost, and in a more environmentally sound manner than conventional printing forms having one or more metal layers for gravure printing. Surprisingly and unexpectedly, the claimed process prepares a printing form from the particular curable

composition containing the epoxy novolac resin having a specific range of epoxide equivalent weight and the amine curing agent having a specific amine equivalent weight that is capable of meeting several of the property requirements for successful performance comparable to conventional gravure printing forms.

The present printing form prepared with a curable composition containing the epoxy novolac resin having an epoxide equivalent weight of about 156 to about 300 and the amine curing agent having an amine equivalent weight of less than 60 g/equivalent exhibits the necessary combination of engravability, solvent resistance, mechanical wear resistance, and print quality. The present curable composition has good coatability as the composition can be applied easily to form a layer on a supporting substrate that is relatively uniform and needs only minimal grinding or polishing. The present curable composition has good curability as the composition can be cured reasonably rapidly in less than 6 hours, and in most embodiments in less than 4 hours. Good coatability and curability allow for a high quality coating of the epoxy resin to be produced within strict tolerances needed for gravure engraving and printing with minimal after treatments. Additionally, since the high quality coating and curing can be rapidly accomplished, the claimed process is economical for time and cost such that it can compete with conventional metal-plating processes for gravure printing cylinders. After curing the layer of the particular curable composition, the layer provides the desired balance between engravability and mechanical wear resistance. The cured layer exhibits a level of hardness that produces well-defined print cell structures when engraved yet resists wear during printing from contact with the doctor blade and the printed substrate, and abrasive particles that may be in the ink. The cured layer of the present composition can be engraved to have cell density at resolution at least up to 200 lines per inch, with minimal or no break out of wall between adjacent cells. And yet, the cured layer of the present composition is capable of printing for relatively long print runs, i.e., at least 100,000 impressions and preferably at least 200,000 or more, with wear reduction of the cell area of no more than 10%, and in most embodiments wear of less than 5%. Furthermore, the cured layer of the present composition has excellent resistance to solvents used in printing inks and cleaning solutions, such that high quality printing can be maintained for the relatively long print runs. Since the present printing form having a cured layer of the present curable composition exhibits the necessary combination of characteristics necessary to perform gravure printing, the present printing form provides significant advance over other non-metal resin-based gravure printing forms of the prior art.

The epoxy novolac resin that is created by the reaction of epichlorohydrin and novolac is an intermediate molecule having a phenolic backbone having pendant epoxide groups. The novolac resin may be prepared from unsubstituted phenols and from substituted phenols, such as cresol. Epoxy novolac resins also encompass epoxy cresol novolac resins, wherein the cresol forms the phenolic backbone of the epoxy novolac resin.

The epoxy novolac resins used in the processes described herein are characterized by an epoxide equivalent weight (EEW) between and optionally including any two of the following values: 156, 160, 170, 180, 190, 200, 210, 220, 230, 240, 250, 260, 270, 280, 290, and 300 g/equiv. In one embodiment the EEW is beween about 156 and about 230 g/equivalent. If the epoxide equivalent weight is above about 300, it is contemplated that the chemical or solvent resistance of the composition of the epoxy novolac resin would deteriorate.

In some embodiments, the epoxy novolac resins have a molecular weight between and optionally including any two of the following values: 312, 400, 600, 800, 1000, 1200, 1500, 1800, 2100, 2400, 2700, and 3000. In one embodiment the molecular weight of the epoxy novolac resin is between about 312 and about 1500. In most embodiments, the epoxy novolac resins have an average functionality greater than 2.0, which leads to higher cross-linking density upon curing. Epoxy novolac resins with higher crosslinking density have good toughness and chemical resistance, which leads to suitable wear and impact resistance and solvent resistance for use as a printing form compared to other epoxy resin compositions, such as DGEBPA and DGEBPF.

In some embodiments, the epoxy novolac resins include resins of the following formula (I)

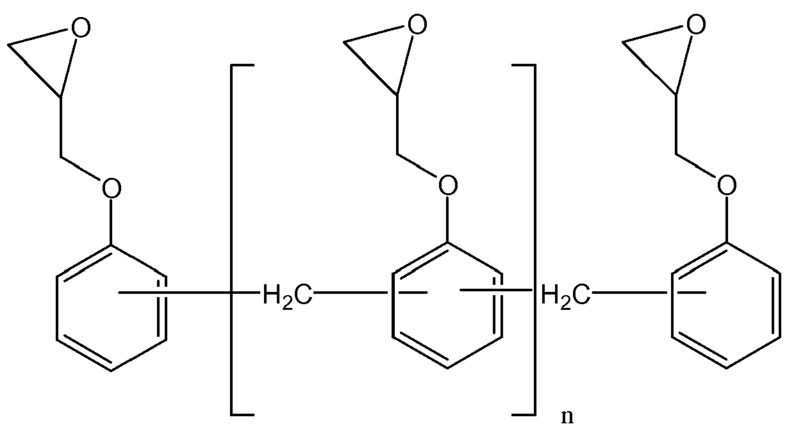

where n can range from about 0.1 to about 20, including fractions therebetween. In some embodiments, n ranges from about 0.2 to about 5.0. In other embodiments, n ranges from about 0.2 to about 2.0. Examples of embodiments of the epoxy novolac resins of formula (I) are D.E.N.™ 431 , D.E.N.™ 438, and D.E.N.™ 439 (available from The Dow Chemical Company, Midland, Michigan, U.S.A.); and EPON™ Resin 160, EPON™ Resin 161 (available from Momentive Specialty Chemicals, Inc., formerly Hexion Specialty Chemicals, part of Momentive Performance Materials Holdings, Inc., Columbus, Ohio, U.S.A).

In some other embodiments the epoxy novolac resins include epoxy cresol novolac resins of the following formula (II)

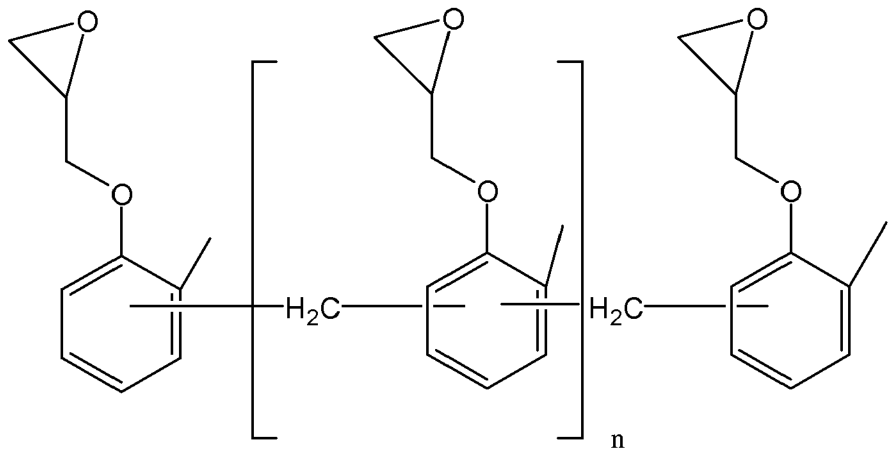

where n can range from about 0.1 to about 20, including fractions therebetween. In some embodiments, n ranges from about 0.2 to about 4. Examples of embodiments of the epoxy novolac resins of formula (II) are Araldite® ECN 1280 and ECN 1273 (available from Huntsman); and EPON™ Resin 164 and EPON™ Resin 165.

In yet other embodiments the epoxy novolac resins include epoxy novolac resins of the following formula (III)

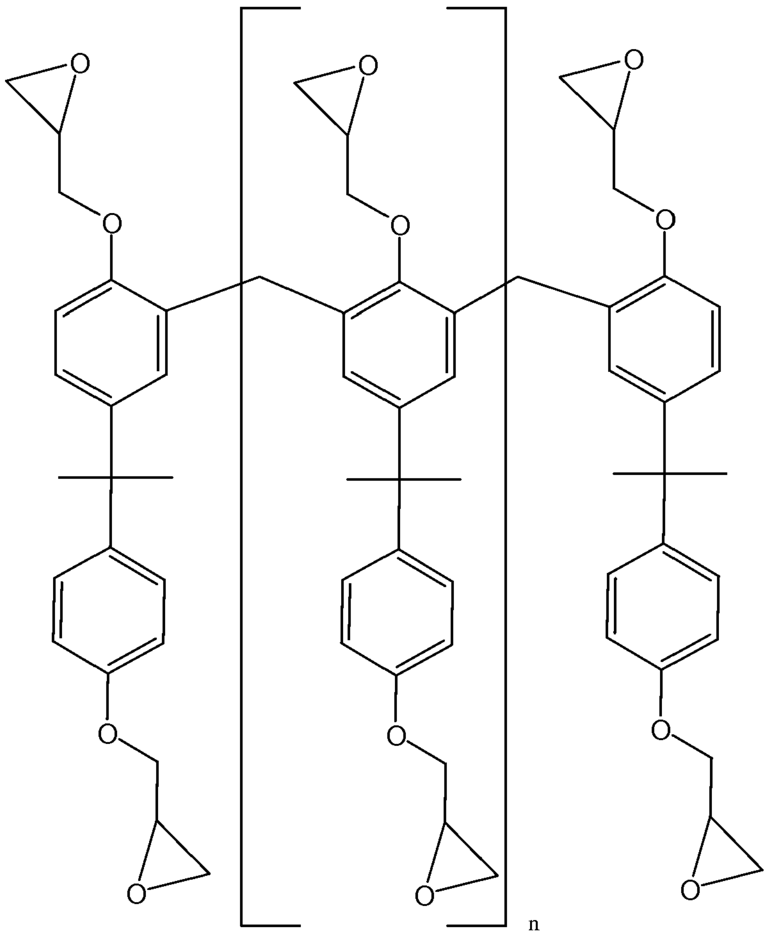

where n can range from about 0 to about 10, including fractions therebetween. In some embodiments, n ranges from about 0 to about 4. Examples of embodiments of the epoxy novolac resins of formula (III) are EPON™ Resin SU-2.5.

Epoxy novolac resins generally contain multiple epoxide groups. The number of epoxide groups per molecule depends upon the number of hydroxyl groups in the starting phenolic novolac resin, the extent to which they reacted and the degree of low molecular species being polymerized during synthesis. The multiple epoxide groups allow these resins to achieve the desired degree of crosslink density. The epoxy novolac compounds of formulas (I), (II), and (III) each contain a distribution of oligomers, i.e., "-mer" units, and as such, n represents a number of -mer units in the epoxy novolac compounds, per the range of values of n for formula (I), formula (II), and formula (III) as indicated above. As used herein, the term "-mer" or "-mer units", encompasses epoxy novolac oligomeric compounds having more than one repeating unit that includes dimers, trimers, tetramers, pentamers, hexamers, and heptamers. In one embodiment, the distribution of -mer units in an epoxy novolac resin includes a mixture of several or all possible (i.e., di-mers through heptamers), such that n represents an average number of -mer units in the resin. In other embodiments, the distribution of -mer units in an epoxy novolac resin includes a mixture of several or all possible (i.e., dimers through heptamers), such that n represents the predominant species of oligomers in the mixture. As another example, the epoxy novolac of formula (I) wherein n equals 2.4, is a mixture of oligomers (i.e., a mixture of dimers, trimers, tetramers, pentamers, and hexamers, and perhaps heptamers), with the predominant species is tetramers and pentamers. For the epoxy novolac compounds represented by formulas (I), (II), and (III), n can be between and optionally include any two of the following values: 0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, per the range for n that is described above. The epoxy novolac resin is present in the curable composition from about 35 to about 95% by weight, based on the combined weight of the components of the curable composition. In some embodiments, the epoxy novolac resin is present in an amount between and optionally including any two of the following values: 35, 40, 45, 50, 55, 60, 65, 70, 75, 80, 85, 90, and 95% by weight, based on the combined weight of the components of the curable composition.

Mixtures of epoxy resins (i.e., more than one epoxy novolac resins, or a mixture of one or more epoxy novolac resins with one or more other epoxy resins) can also be used in the curable composition. Examples of the other epoxy resin as a second epoxy resin that can be blended with the epoxy novolac resin include, without limitation, bisphenol A

diglycidyl ether, "DGEBPA" and its oligomers,

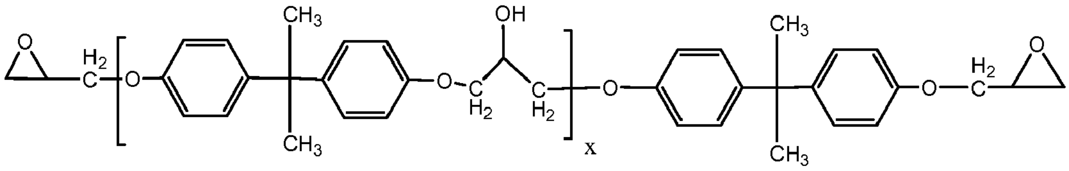

and bisphenol F diglycidyl ether, "DGEBFA,"and its oligomers,

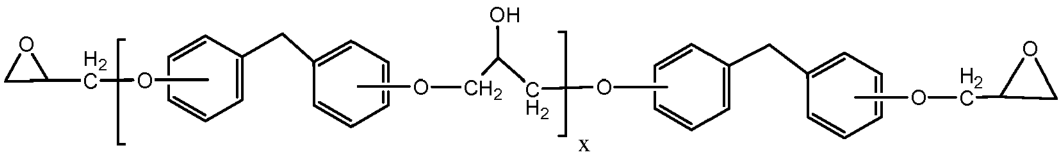

where x can be 0 to about 16 for their oligomers. For DGEBPA and DGEBFA, which is non-oligomeric, x is 0. Molecular weight of oligomers of DGEBPA and DGEBFA can be up to approximately 5000 g/mol. Other epoxy resins suitable as a second epoxy resin that can be blended with the epoxy novolac resin include multifunctional epoxy-reactive diluents, such as tri-functional and tetra-functional epoxy-reactive diluents, having viscosity greater than about 300 cps. In some embodiments, the multifunctional epoxy-reactive diluent as the second epoxy resin can be used alone or with other multifunctional epoxy-reactive diluents having viscosity greater than about 300 cps. Examples of multifunctional epoxy-reactive diluents as the second epoxy resin include, but are not limited to, 4-glycidyloxy-N,N-diglycidylaniline which is available commercially as Araldite®MY0510, and N,N,N,N'-tetraglycidyl-4,4'-methylene-bis-benzenamine, which is available commercially as Araldite®MY-721 both from Huntsman International LLC (Salt Lake City, Utah, U.S.A.). When blended with at least one other epoxy resin in the curable composition, the epoxy novolac resin is present in at least 50 wt % based on the combined weight of the epoxy novolac resin and the at least one other epoxy resin.

Curing agents used in the processes described herein are primary amines and secondary amines, and thus are referred to herein as amine curing agents. Amine curing agents are primarily suitable for the present process because they increase the cure speed of the curable composition compared to other possible curing agents such as acids and/or anhydrides, and are capable of curing the composition at moderate temperatures, e.g., room temperature to about 100°C. Amine curing agents are characterized by an amine equivalent weight (AEW) of less than or equal to about 60 g/equivalent. In an embodiment, the amine equivalent weight is between and optionally including any two of the following values: 20, 30, 40, 50, and 60 g/equivalent. In most embodiments, the amine curing agent is characterized by an amine equivalent weight of about 20 to 60 g/equivalent. The amine curing agent having amine equivalent weight of less than or equal to 60 g/equivalent aids in providing a cured layer of the composition with a sufficient degree of solvent resistance such that print quality can be maintained for print run lengths of at least 100,000 impressions or more. Solvent resistance of the resin-based layer on the printing form is particularly important since many inks used in gravure printing are solvent-based inks, and attack by solvents of the resin-based layer can cause the layer to swell and thereby detrimentally impact print quality and run length. The amine curing agent is present in the curable composition from about 3 to about 30% by weight, based upon the combined weight of the components of the curable composition. In some embodiments, the amine curing agent is present in an amount between and optionally including any two of the following values: 3, 5, 10, 15, 20, 25, and 30% by weight, based on the combined weight of the components of the curable composition.

In most embodiments, the amine curing agent has 2 or more amino functionalities per molecule. The amines can be aliphatic amines (e.g., triethylenetetramine, diethylenetriamine, tetraethylenepentamine), aliphatic polyamines, modified aliphatic polyamines, cycloaliphatic amines (e.g., isophorone diamine, 1,2-diaminocyclohexane, 1-(2-aminoethyl) piperazine, bis(4-aminocyclohexyl)methane), modified cycloaliphatic amines, aromatic amines (e.g., *m*-phenylenediamine, 4,4'-diaminodiphenylmethane, 4,4'-diaminodiphenyl sulfone, diethyltoluenediamine); or arylyl amines, which have cycloaliphatic or aromatic moieties from which the amine functional groups are separated by methylene groups $-CH_2-$ (e.g., m-xylylene diamine and 1,3-bis(aminomethyl cyclohexane)). Epoxy curing agents are described in Epoxy Resins Chemistry and Technology, Clayton A. May editor, 2nd edition, Marcel Dekker, In., N.Y.. An extensive list of commercial amine curing agents is also given in Table 15 on p. 730 of "Epoxy Resins," by Ha. Q. Pham and Maurice J. Marks in Encyclopedia of Polymer Science and Technology, 4th ed., Jacqueline I. Kroschwitz, exec. ed., John Wiley & Sons, Hoboken, NJ, 2004, pp. 678-804. Mixtures of amine curing agents can also be used. In some embodiments the curing agent is triethylenetetramine, diethylenetriamine, or a cycloaliphatic amine. In most embodiments, the ratio of epoxy functionality to amine hydrogen functionality is from about 0.7:1.0 to about 1.0:0.7, on a mole-to-mole basis.

The epoxy novolac resin can be cured in the presence of the curing agent and a catalyst, and as such the curable composition may include a catalyst. Catalytic polymerizations of epoxy occur with a variety of Lewis bases and acids as well as salts and metal complexes. Epoxy curing reactions are described in Epoxy Resins Chemistry and Technology, Clayton A. May editor, 2nd edition, Marcel Dekker, Inc, NY. Suitable catalysts include, but are not limited to, imidazoles, 2-ethyl-4-methyl imidazole, 2,4,6-tris(dimethylaminomethyl)phenol, and nonyl phenol. The catalyst can be present in the curable composition from 0 to about 10% by weight, based on the combined weight of the components of the curable composition. In some embodiments, the catalyst is present in an amount between and optionally including any two of the following values: 0, 1, 2, 3, 4, 5, 6, 7, 8, 9, and 10 wt%, based on the combined weight of the components of the curable composition.

The curable composition used in the processes described herein optionally contains one or more epoxy-reactive diluents. The epoxy-reactive diluents are low viscosity epoxies that are used to modify the viscosity and other properties, such as, wetting and impregnation, of the epoxy composition that is to be cured. The viscosity of the epoxy-reactive diluents is typically less than about 300 cps at room temperature. In some embodiments, the viscosity of the epoxy-reactive diluents is less than or equal to about 1000 cps at room temperature. In some other embodiments, an epoxy-reactive diluent can have viscosity greater than about 300 cps up to about 1000 cps, and even higher (at room temperature), particularly when the higher viscosity epoxy-reactive diluent is included in a mixture of epoxy-reactive diluents such that the viscosity of the mixture is less than about 300 cps. The epoxy-reactive diluent may be monofunctional or multifunctional (e.g., di-, tri-, or tetra-functional), and may be referred to herein as reactive diluent, or functional diluent, or diluent.

Examples of monofunctional diluents include without limitation: p-tertiarybutyl phenol glycidyl ether, cresyl glycidyl ether, 2-ethylhexyl glycidyl ether, and $C_8$- $C_{14}$ glycidyl ether. The monofunctional diluent can be used in small enough amounts, from 0 to about 20 wt% based on the combined weight of the components of the composition, that the chemical resistance of the epoxy is not impaired. In some embodiments, the monofunctional diluent is present in an amount between and optionally including any two of the following values: 0, 2, 4, 6, 8,10, 12, 14, 16, 18, and 20 wt%, based on the combined weight of the components of the curable composition.

Examples of difunctional diluents include, without limitation, 1,4-butanediol diglycidyl ether; neopentyl glycol diglycidyl ether; and cyclohexane dimethanol diglycidyl ether. Difunctional diluents can be used from 0 to about 30 wt%, based on the combined weight of the components of the composition. In some embodiments, the difunctional diluent is present in an amount between and optionally including any two of the following values: 0, 1, 3, 5, 7, 9, 11, 13, 15, 17, 19, 21, 23, 25, 27, and 30 wt%, based on the combined weight of the components of the curable composition.

Examples of trifunctional diluents include, but are not limited to, trimethylol propane triglycidyl ether, and 4-glycidyloxy-N,N-diglycidylaniline which is available commercially as Araldite®MY0510 from Huntsman International LLC (Salt Lake City, Utah, U.S.A.). Trifunctional diluents can be used from 0 to about 30 wt%, based on the combined weight of the components of the composition. In some embodiments, the trifunctional diluent is present in an amount between and optionally including any two of the following values: 0, 2, 4, 6, 8, 10, 12, 14, 16, 18, 20, 22, 24, 26, 28, and 30 wt%, based on the combined weight of the components of the curable composition.

Examples of tetrafunctional diluents are pentaerythritol tetraglycidyl ether, and N,N,N',N'-tetraglycidyl-4,4'-methylene-bis-benzenamine, which is available commercially as Araldite®MY-721 from Huntsman International. Tetrafunctional diluents can be used from 0 to about 20 wt%, based on the combined weight of the components of the composition. In some embodiments, the tetrafunctional diluent is present in an amount between and optionally including any two of the following values: 0, 2, 4, 6, 8, 10, 12, 14, 16, 18, and 20 wt%, based on the combined weight of the components of the curable composition.

A mixture of epoxy-reactive diluents may be used, with minimal use of a monofunctional diluent (i.e., less than 20 wt%, and preferably less than 10 wt%), to achieve desired viscosity of the curable composition while maintaining desired properties of the composition. In some embodiments, a mixture of diluents can be present from 0 to about 40% by weight, based upon the combined weight of the components of the curable composition. In some embodiments, the mixture of diluents is present in an amount between and optionally including any two of the following values: 0, 1, 3, 5, 7, 9, 10, 11, 13, 15, 17, 19, 20, 21, 23, 25, 27, 29, 30, 31, 33, 35, 37, and 40 wt%, based on the combined weight of the components of the curable composition.

The curable composition may also include one or more liquid compounds that aid in rendering the composition suitable to conduct the applying step of the present method. The curable composition may be dispersed or dissolved or suspended in the liquid compounds, so that the curable composition can be applied by the desired means and can form a layer of the composition on the supporting substrate. The liquid compound is not limited and can include organic compounds and aqueous compounds. The one or more liquid compounds may be a solvent, that is a substance which is capable of dissolving another substance (i.e., resin) to form a uniform mixture. The liquid compound may be a carrier, such as the reactive diluent, that is capable of dispersing or suspending the material in the composition in solution sufficient to conduct the steps of the present method. The curable composition may include one or more liquid compounds as a solvent and/or carrier for the curable composition. In most embodiments, the liquid compound is one or more organic

solvents. In most embodiments, the liquid solvent or solvent mixture is removed from the composition by evaporation after application of the composition to the supporting substrate, or most typically, during the curing step.

In the curable compositions used in the processes described herein, epoxy novolac resin is present at about 35 to about 95 wt%, the amine curing agent at about 5 to about 28 wt%, the catalyst at 0 to about 10 wt%, and the reactive diluent at 0 to about 40 wt%, based on the combined weight of epoxy novolac resin, amine curing agent, catalyst, and reactive diluent. In some embodiments the curable composition includes the epoxy novolac resin that is present at about 50 to about 95 wt%, the amine curing agent at about 5 to about 28 wt%, and the reactive diluents at 0 to about 25 wt%, based on the combined weight of epoxy novolac resin, amine curing agent, and reactive diluents. In some other embodiments of the curable compositions used in the processes described herein, epoxy novolac resin is present at about 50 to about 90 wt%, the amine curing agent at about 5 to about 25 wt%, the catalyst at about 0 to about 10 wt%, and the reactive diluent at about 0 to about 25 wt%, based on the combined weight of the components of the curable composition.

Optionally, the curable composition can include up to about 50 wt% nanoparticles, i.e., particles having at least one dimension less than about 500 nm. In an embodiment, the value of the at least one dimension is between and optionally including any two of the following values: 1, 10, 50, 75, 100, 200, 300, 400, and 500 nm. In an embodiment, the value is between about 1 and about 100 nm. The nanoparticles may be present in an amount between and optionally including any two of the following values: 0, 0.1, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 32, 34, 36, 38, 40, 42, 44, 46, 48, and 50 wt% based on the combined weight of the components of the curable composition. The nanoparticles can provide hardness and modulus of the composition, which may lead to increased wear resistance and improved engravability of a cured layer of the composition. In one embodiment, the nanoparticles are present in an amount between about 0.1 and about 50 wt%; in some embodiments, the nanoparticles are present in an amount between about 0.1 and 30 wt%; in other embodiments, the nanoparticles are present in an amount between about 0.1 to about 20 wt%; in some embodiments, the nanoparticles are present in an amount between about 0.1 to about 10 wt%; and in some other embodiments, the nanoparticles are present in an amount between about 10 to 20 wt%, based on the combined weight of the components of the composition.

Optionally, the nanoparticles may be coated or subjected to a surface treatment with, for example, an organic onium species, to improve interaction between the nanoparticles and the resin.

Examples of suitable nanoparticles include, but are not limited to: aluminum oxides (e.g., alumina); silica (e.g., colloidal silica and fumed silica); zinc oxide; zirconium oxide; titanium oxide; magnesium oxides; tungsten oxides; tungsten carbides; silicon carbide; titanium carbide; boron nitrides; molybdenum disulfide; clays, e.g., laponite, bentonite, montmorillonite, hectorite, kaolinite, dickite, nacrite, halloysite, saponite, nontronite, beidellite, volhonskoite, sauconite, magadite, medmonite, kenyaite, vermiculite, serpentines, attapulgite, kulkeite, alletite, sepiolite, allophane, imogolite; graphene; graphene oxide; carbon nanotubes; carbon black; carbon filaments; and mixtures thereof.

Optionally, the curable composition may include fillers as a solid lubricant to impart improved wear characteristics of the cured composition layer. Fillers include particles having at least one dimension greater than about 500 nm, and generally between about 500 nm to about 5 micron. Examples of fillers, include but are not limited to, aluminum oxides (e.g., alumina); silica (e.g., colloidal silica and fumed silica); zinc oxide; zirconium oxide; titanium oxide; magnesium oxides; tungsten carbides; silicon carbide; titanium carbide; boron nitrides; molybdenum disulfide; graphites; poly (tetrafluoroethylene); and mixtures thereof.

Optionally, the curable composition may include resin modifiers. Resin modifiers may be used to increase crosslinking density and/or stabilize the crosslinked network, which can provide improved end-use characteristics, such as increased solvent resistance, wear resistance, and/or improve engravability of the cured layer of the composition. Resin modifiers include, but are not limited to, acrylate monoesters of alcohols and polyols; acrylate polyesters of alcohols and polyols; methacrylate monoesters of alcohols and polyols; and methacrylate polyesters of alcohols and polyols; where the alcohols and the polyols suitable include, but are not limited to, alkanols, alkylene glycols, trimethylol propane, ethoxylated trimethylol propane, pentaerythritol, and polyacrylol oligomers. A combination of monofunctional and multifunctional acrylates or methacrylates may be used. The curable composition may include resin modifiers at up to about 10 wt%, based on the combined weight of the components of the curable composition.

The curable composition optionally may include additives to the epoxy novolac resin, such as flexibilizing components, non-reactive diluents (such as, dibutyl phthalate), surfactants, dispersants, dyes, pigments, and wetting and leveling additives for coating uniformity and appearance. Examples of suitable surfactants include, but are not limited to, fluorinated surfactants. Epoxy may be flexibilized as described in Epoxy Resins Chemistry and Technology, Clayton A. May editor, 2nd edition, Marcel Dekker, Inc, NY. Suitable flexibilizing components include, but are not limited to, polyamides, carboxylated polymers, fatty diamines, polyglycol diepoxides, polyurethane amines, and polyetherurethane amines. In some embodiments the flexibilizing component included in the curable composition is polyurethane amine or polyetherurethane amine, such as for example, Aradur® 70BD, which is available from Huntsman International LLC. The flexibilizing component can be present at from 0 to about 15 wt%, based on the combined weight of the components of the curable composition. In some embodiments, the flexibilizing component is present in an amount between and

optionally including any two of the following values: 0, 1, 2, 3, 4, 5, 7, 9, 11, 13, and 15 wt%, based on the combined weight of the components of the curable composition.

Examples of wetting and leveling additives, which may be referred to as leveling additive, for coating uniformity and appearance are acrylic polymers, poly(dimethylsiloxane), methylalkylpolysiloxane copolymers, fluoro-modified acrylates, and fluoro-modified polyacrylate copolymers. The leveling additive can be present at from 0 to about 10 wt%, based on the combined weight of the components of the curable composition. In some embodiments, the leveling additive can be present from about 0.1 to 5 wt%, based on the combined weight of the components of the curable composition. In some embodiments, the leveling additive is present in an amount between and optionally including any two of the following values: 0, 0.1, 1, 2, 3, 4, 5, 7, 9, and 10 wt%, based on the combined weight of the components of the curable composition

A dispersant can be added in order to disperse the nanoparticles and/or fillers and/or pigments and avoid flocculation and agglomeration. Dispersants suitable for use are not limited, provided that the dispersant can uniformly distribute the nanoparticles and/or fillers in the layer, and is sufficiently compatible with the resin and other components in the curable composition to the extent that a suitable layer is produced. A wide range of dispersants are commercially available. One embodiment of suitable dispersants are the A-B dispersants generally described in "Use of A-B Block Polymers as Dispersants For Non-aqueous Coating Systems" by H. K. Jakubauskas, Journal of Coating Technology, Vol. 58; Number 736; pages 71-82. Useful A-B dispersants are disclosed in U.S. Patent Nos. 3,684,771; 3,788,996; 4,070,388; and 4,032,698. Other useful dispersants are disclosed in U.S. Patent 6,472,463. Examples of dispersants include acrylate polymers with basic, acidic and non-ionic groups that can stabilize pigment, particulate and/or filler dispersions. The dispersant can be present in an amount of about 0.1 to 10% by weight, based on the combined weight of the components in the curable composition.

The curable composition includes at least the epoxy novolac resin having the particular EEW and the amine curing agent having the particular AEW, as stated above. In most embodiments, the curable composition can include or can consist essentially of the epoxy novolac resin, the amine curing agent, and the catalyst. In other embodiments, the curable composition can include or can consist essentially of the epoxy novolac resin, the amine curing agent, the catalyst, and the nanoparticles. In yet other embodiments, the curable composition can include or can consist essentially of the epoxy novolac resin, the amine curing agent, the catalyst, and the epoxy-reactive diluent. In yet other embodiments, the curable composition can include or can consist essentially of the epoxy novolac resin, the amine curing agent, the catalyst, the epoxy-reactive diluent, and the flexibilizing component. In yet other embodiments, the curable composition can include or can consist essentially of the epoxy novolac resin, the amine curing agent, the catalyst, the epoxy-reactive diluent, and the leveling additive. In still other embodiments, the curable composition can include or can consist essentially of the epoxy novolac resin, the amine curing agent, the additional epoxy resin, the catalyst, and the epoxy-reactive diluent. In some embodiments, the curable compositions include the epoxy novolac resin present at about 50 to about 90 wt%, the amine curing agent at about 5 to about 25 wt%, the second epoxy resin at about 0 to about 40 wt%, the reactive diluents at about 0 to about 40 wt%, the catalyst at about 0 to about 10 wt%, the nanoparticles at about 1 to about 50 wt%, the resin modifier at about 0 to 10 wt%, the flexibilizing component at about 0 to about 15 wt%, and the leveling additive at about 0 to 10 wt%, based on the combined weight of the components of the curable composition.

In one embodiment, the epoxy novolac resin in the curable composition used for the printing form has an epoxide equivalent weight of about 156 to about 200 g/equivalent; and the amine curing agent is triethylenetetramine, diethylenetriamine, or a cycloaliphatic amine. In an embodiment, the curable composition further includes up to about 50 wt% nanoparticles; in another embodiment, up to about 20 wt% nanoparticles, such as alumina nanoparticles or silica nanoparticles. The curable epoxy novolac composition for the printing form can further include at least one additional epoxy resin, for example, bisphenol F diglycidyl ether or bisphenol A diglycidyl ether.

The process of preparing a printing form includes applying the curable composition onto a supporting substrate, to form a layer of the curable composition. The composition may be applied to the supporting substrate by various means that are well known in the art. The method of the present invention is particularly applicable to the application of the curable composition as a liquid to a supporting substrate that can be used as a printing roll or print cylinder in a rotogravure printing process. In some embodiments for application to the supporting substrate, the curable composition has a viscosity less than about 5000 cps. In other embodiments for application to the supporting substrate, the curable composition has a viscosityless than about 3000 cps. The supporting substrate can also include a planar support sheet that is typically composed of a metal. The supporting substrate, e.g., printing roll or print cylinder, may be made of metal (e.g., aluminum or steel), ceramic, or a polymeric material. Prior to the application of the curable composition to the supporting substrate, an exterior surface of the supporting substrate that receives the composition may be pretreated by means of a plasma or corona pretreatment to clean and/or alter the surface (i.e., lower the surface tension) of the supporting substrate for improved film or coating wetout and bonding strengths. Additionally or alternatively, a primer solution, such as an epoxy primer solution, may be applied to the exterior surface of the supporting substrate to improve adhesion of the curable (and cured) composition to the supporting substrate.

The curable composition can be applied to the supporting substrate by any suitable method, including but not

limited to, injection, pouring, liquid casting, jetting, immersion, spraying, vapor deposition, and coating. Examples of suitable methods of coating include spin coating, dip coating, slot coating, roller coating, extrusion coating, brush coating, ring coating, powder coating, and blade (e.g., doctor blade) coating, all as known in the art and described in, e.g., British Patent No. 1,544,748. In one embodiment the curable composition is applied by spraying the curable composition onto the surface of the supporting substrate, such as the printing roll or cylinder. Spraying can be accomplished through the use of a nozzle by techniques known in the art. In another embodiment, the curable composition is applied to the exterior surface of the supporting substrate by brush coating in a manner similar to that described in U. S. Patent 4,007,680. In most embodiments, the curable composition is applied so as to form a continuous or seamless layer on a cylindrically-shaped supporting substrate, so as to provide a continuous print surface for the printing form (after curing and engraving). The exterior surface of the supporting substrate, or the supporting substrate, can be preheated in some embodiments from about 23°C to about 40°C prior to application of the curable composition. The curable composition, as applied to the surface of the supporting substrate, forms a layer that has a thickness between about 2 to about 300 mils (50.8 to 7620 μm). Optionally the thickness of the curable composition layer includes any two of the following thicknesses: 2, 4, 8, 12, 16, 20, 50, 100, 150, 200, 250, and 300 mils (50.8, 102, 203, 305, 406, 508, 1270, 2540, 3810, 5080, 6350, and 7620 μm).

The process of preparing a printing form includes curing the layer at one or more temperatures in the range of room temperature to about 250°C. After the curable composition is applied to the supporting substrate, the layer of the composition is cured to harden on the supporting substrate, so that the layer is capable of being engraved. Hardening of the resin composition occurs by crosslinking of polymer chains of the epoxy novolac resin brought about by the reactive components in the composition, such as the amine curing agent, optional catalyst, and optional reactive diluent, with reactive groups in the resin. Curing can be performed at ambient temperature. Although methods of curing epoxy resins include exposure to ultraviolet radiation and gelation at room temperature, for most embodiments of the present process curing includes heating the layer of the composition. Curing can be accelerated by heating the layer of the curable composition at one or more temperatures in a range from above room temperature (i.e., ambient temperature) to about 250°C. The curable compositions described herein are cured thermally (i.e., by heating) in less than about 6 hours. In some embodiments, the layer of the curable composition is cured thermally in less than 4 hours; in some other embodiments, the layer of the curable composition is cured thermally in about 1 hour to about 2 hours. In yet other embodiments, the layer of the curable composition is cured thermally in about 1 hour or less. Times and temperatures will depend on the specific curable composition and are readily determined by one skilled in the art. Curing at temperatures up to 250°C also aids in driving out solvent from the curing resin layer, if solvent is present in the curable resin composition. More specifically, the temperature is in a range between and optionally including any two of the following values: 16, 30, 50, 70, 90, 110, 130, 150, 170, 190, 210, 230, and 250°C. Curing can be carried out at one temperature, or at two temperatures sequentially in the range, for example, 1 hour at 100°C and then 4 hours at 160°C. In an embodiment, the layer of the composition is cured by heating at about 100°C for 2 hours. In another embodiment, the layer of the composition is cured by heating at about 100°C for 1 hour and then about 150 to 160°C for about another 1 hour. One suitable method to determine if the layer of the curable composition is sufficiently cured is by conducting model studies of the composition based on end-use performance characteristics such as adhesion, wear resistance, and solvent resistance.

The cured layer of the curable composition (after application to the surface of the supporting substrate and cured) has a thickness that is from about 2 to about 300 mils (50.8 to 7620 μm). The thickness of the cured layer is between and optionally including any two of the following thicknesses: 2, 4, 8, 12, 16, 20, 50, 100, 150, 200, 250, and 300 mils (50.8, 102, 203, 305, 406, 508, 1270, 2540, 3810, 5080, 6350, and 7620 μm). Optionally, the cured layer can be ground and polished to desired thickness, cylindricity, and/or smoothness, prior to engraving as disclosed in U.S. Patent 5,694,852. The smoothness of the cured layer can be reported as Rz value. In most embodiments, the smoothness of the cured layer has Rz value less than about 100 microinches (2.54 μm); and, in other embodiments, the Rz value is less than about 80 microinches (2.03 μm).

The process of preparing a printing form includes engraving at least one cell into the cured layer of the composition on the supporting substrate. After the curable composition is applied to the substrate and cured, engraving of the cured composition layer removes the hardened composition in depth to form a plurality of individual cells in the layer for carrying ink which transfers, in whole or part, during gravure printing of the desired image. In another embodiment, engraving of cells forms recesses or recessed areas in the layer, and outermost surface of the layer carries ink which transfers, in whole or part, during relief printing of the desired image. The engraving of the plurality of cells in the cured layer on the supporting substrate provides a printing form or, equivalently, an image carrier, having a printing surface that is capable of reproducing the desired image by printing onto a substrate. The engraving may be accomplished by any of various engraving methods known in the art. Examples include, but are not limited to, electromechanical engraving (e.g., with a diamond stylus) and laser engraving. These engraving methods may be part of an electronic engraving system. In one embodiment, engraving is carried out using a diamond stylus cutting tool. In another embodiment, direct laser non-contact engraving is used for the creation of the cells. Examples of suitable lasers include, but are not limited to, $CO_2$ lasers, YAG lasers (based on yttrium aluminum garnet crystals), and diode lasers. The present process of

preparing the printing form having a cured layer of the epoxy novolac composition is particularly advantageous in that the cured layer can be engraved using conventional engraving equipment at standard or substantially standard conditions that are used to engrave copper layer for conventional gravure cylinders.

One or more pigments may be added to the curable composition in order to enhance its laser engravability. The pigment may be present in the laser engravable composition in an amount of from about 1 wt% to about 25 wt%; and in one embodiment from about 3 wt% to about 20 wt%, based on the combined weight of the components of the curable composition. In some embodiments, the pigment is present in an amount between and optionally including any two of the following values: 0, 1, 3, 6, 8, 10, 12, 14, 16, 18, 20, 22, and 25 wt%, based on the combined weight of the components of the curable composition. Examples of such pigments include, but are not limited to, black silicic pigments (containing carbon-encapsulated silica particles), and carbon black.

Optionally, the engraved layer can be further treated by polishing to remove burrs, and/or by applying a coating of a fluoropolymeric composition over the engraved layer (i.e., overcoat) to improve the ink releasability of the printing form.

In some embodiments, the printing form is in the shape of a cylinder or plate. In some embodiments, the supporting substrate is metal or a polymer. In most embodiments, the printing form is suited for gravure printing. Gravure printing is a method of printing in which the printing form prints from an image area, where the image area is depressed and consists of small recessed cells (or wells) to contain the ink or printing material, and the non-image area is the surface of the form. In most embodiments, the printing surface is the cured layer of the epoxy novolac composition that is engraved to form an ink receptive cell surface suitable to carry ink for gravure printing. It is also contemplated that in some embodiments the printing form may be suited for relief printing, including use as a letterpress printing form. Relief printing is a method of printing in which the printing form prints from an image area, where the image area of the printing form is raised and the non-image area is depressed. For printing forms useful for relief printing, the engraving of at least one cell creates the non-image area that would not carry ink for printing the desired image, and the surface raised above the cell is the image area that carries ink for printing the desired image. In some embodiments the printing surface is topmost surface of raised elements of a relief surface suitable for carrying ink for relief printing.

In a further embodiment, a printing form is provided that includes a continuous print surface adjacent to a supporting substrate, wherein the continuous print surface is a layer of a cured epoxy composition prepared from a curable composition that includes i) an epoxy novolac resin having an epoxide equivalent weight of about 156 to about 300, and ii) an amine curing agent selected from primary amines and secondary amines, the agent having an amine equivalent weight of less than or equal to 60 g/equivalent.

In another embodiment, a process is provided for printing with the printing form that was prepared as described above. The process for printing further includes applying an ink, typically a solvent ink, to the at least one cell that has been engraved into the cured layer of the prepared printing form, and transferring ink from the cell to a printable substrate. Suitable solvent inks include those based on organic solvents such as, without limitation, alcohols, hydrocarbons (e.g., toluene, heptane) acetates (e.g., ethyl acetate), and ketones (e.g., methyl ethyl ketone). Aqueous inks are also suitable for printing with the present printing form.

When the cured layer is not adequately solvent resistant, absorbing solvent from the solvent ink can cause the cured layer to swell excessively. Swelling excessively is detrimental to print quality and to the durability of the image carrier. The amount of swelling in terms of cured layer weight gain in the process described herein is less than about 10 wt%. In some embodiments, the amount of swelling of the cured layer is between 0 and about 5 wt%. This can be achieved in part by through the choice of amine curing agent, i.e., by using an amine curing agent characterized by an amine equivalent weight of less than or equal to about 60 g/equivalent. In addition, the structure of epoxy novolac resin affects the amount of swell. For example, increased crosslinking of the polymer chains in the epoxy novolac resin can lead to reduced swell, i.e., improved solvent resistance, of the cured layer.

EXAMPLES

The present invention is further defined in the following Examples. It should be understood that these Examples, while indicating preferred embodiments of the invention, are given by way of illustration only. From the above discussion and these Examples, one skilled in the art can ascertain the essential characteristics of this invention, and without departing from the spirit and scope thereof, can make various changes and modifications of the invention to adapt it to various uses and conditions.

The meaning of abbreviations is as follows: "APS" means average particle size, "cm" means centimeter(s), "DGEBPA " means diglycidyl ether of bisphenol A, "DGEBPF " means diglycidyl ether of bisphenol F. "EEW" means epoxide equivalent weight, "equiv" means equivalent(s), "g" means gram(s), "h" means hour(s), "L" means liter(s), "lpi" means lines per inch, "MEK" means methyl ethyl ketone, "mg" means milligram(s), "mL" means milliliter(s), "mPa·s" means millipascal"second(s), "nm" means nanometer(s), "oz" means ounce(s), "P" means poise, "TETA" means triethylenetetraamine, "wt%" means weight percent(age), and "μm" means micrometer.

Unless otherwise indicated, the epoxide equivalent weight (EEW) cited for each of the epoxy materials is the

value reported by the manufacturer, based upon each manufacturer's standard test method.

Methods

Solvent Resistance

Epoxy novolac resin compositions were prepared and coated on Mylar® or Kapton® sheet support using a 10 mil (254 μm) drawdown bar to form a polymeric film (i.e., layer) on the support. The polymeric film samples were cured as indicated in the Example, and peeled from the Mylar® or Kapton® support. Film fragments (50-100 mg) of the polymeric film samples were weighed and placed into jars containing 10-20 mL of specified solvent. The film fragments were immersed for one week (i.e., 7 day), then blotted dry and weighed. The wt% change of the film fragments is calculated as:

$$100 * [\text{weight}(7\text{day}) - \text{weight}(\text{initial})] / \text{weight}(\text{initial}).$$

The composition had good solvent resistance if, after 7 days in the solvent, the wt% change of the fragments was less than 10%.

Engravability

Epoxy novolac resin compositions were prepared, coated onto a cylinder, cured and engraved as indicated in the Example. A cured resin sample was deemed to have good engravability if engraving of the sample to create cells at 170 to 200 lines per inch (Ipi) could be achieved with less than 15 % breakout. Engraved image resolution of 170 to 200 lines per inch corresponds to a cell width of about 115 to 140 μm and a width of a cell wall of less than 25 μm. A breakout is defined herein as a defect in which a wall adjacent to two cells has a break in it, thereby producing a connection between the two cells. The engraved area was examined microscopically, and greater than or equal to 30 to 50 cells were examined to determine the breakout percentage.

Wear

A wear test was established to mimic the gravure printing process. For the wear test, the cylinder, which has a cured layer of the composition, was rotated, was partially immersed in the ink tray, and was contacting a steel doctor blade once per revolution. The ink used for the test was either Multiprint White ink (from Del Val Ink and Color Inc.), or HT Color STR New White ink (from Hi-Tech Color Inc. (Odenton, MD, U.S.A.). The cell area of the engraved cylinder was measured before and after 300,000 revolutions (unless otherwise noted) to monitor the extent of wear with a Hirox KH-7700 microscope. Wear is reported as a percent reduction in cell area.

Print Quality

Print quality was determined for a long print run, i.e., greater than 100,000 impressions, and is reported in terms of number of impressions until the print quality (considering characteristics such as sharpness, smearing, etc.) was visually unacceptable.

Materials

D.E.N.™ 431 epoxy novolac resin was obtained from The Dow Chemical Company (Midland, Michigan, U.S.A.). Properties of this resin are EEW of 172-179 g/equiv, viscosity of 1100-1700 mPa·s at 51.7°C, and multi-epoxy functionality (± 2.8).

Insulcast 504 clear (bisphenol A epoxy), Insulcast 504 BLK (bisphenol A epoxy with carbon black) and Insulcure 9 curing agent (tetraethylenepentamine, CAS No. 112-57-2) were obtained from ITW Polymer Technologies (Glenview, Illinois, U.S.A.).

EPON™ Resin 828 (diglycidyl ether of Bisphenol A, "DGEBPA") was obtained from Hexion Specialty Chemicals, Inc. (now Momentive Specialty Chemicals, Inc., part of Momentive Performance Materials Holdings, Inc., Columbus, Ohio, U.S.A.). Properties of this resin are EEW of 185-192 g/equiv, viscosity of 110-150 P.

EPON™ Resin 862 (diglycidyl ether of bisphenol F, "DGEBPF") was obtained from Hexion Specialty Chemicals, Inc. (now Momentive Specialty Chemicals, Inc., part of Momentive Performance Materials Holdings, Inc., Columbus,

Ohio, U.S.A.). Properties of this resin are EEW of 165-173 g/equiv, viscosity of 24-45 P.

Resiflow® flow additives were obtained from Estron Chemical, Inc. (Calvert City, Kentucky, U.S.A.)

Resiflow® L-37 is a reactive polyacrylate flow additive.

Resiflow® LH-240 is a reactive, hydroxyl functional polyacrylate flow additive.

Resiflow®-S is a 50 wt% solution of an acrylic polymer in Aromatic Solvent 100 (aromatic hydrocarbons, CAS No. 64742-95-6) flow additive.

Epikure™ curing agents were obtained from Hexion Specialty Chemicals, Inc.(now Momentive Specialty Chemicals, Inc., part of Momentive Performance Materials Holdings, Inc., Columbus, Ohio, U.S.A.).

Epikure™ 3010 is a polyamidoamine based on tall oil fatty acid and polyamines. Epikure™ 3072 is a modified polyethylene polyamine adduct. Epikure™ 3140 is a low viscosity polyamide based on dimerized fatty acid and polyamines.

Epikure™ 3175 is a modified polyamide.

Epikure™ 3274 is an aliphatic amine.

Araldite® ECN epoxy cresol novolac resin and Aradur® curing agents were obtained from Huntsman International LLC (Salt Lake City, Utah, U.S.A.).

The properties of Araldite® ECN 1273 epoxy cresol novolac resin are EEW 217-233 g/equivalent, melt viscosity of 400-800 cp at 150°C, and 4.8 functionality.

Araldite® DY-N is di-functional epoxy reactive diluent, and was obtained from Huntsman International LLC (Salt Lake City, Utah, U.S.A.).

Aradur® 355 is a cycloaliphatic amine.

Aradur® 70BD is a polyetherurethane amine.

NanoTek® nano-sized aluminum oxide, referred to as "nanoalumina," was obtained from Alfa Aesar (catalog no.44932, Ward Hill, Massachusetts, U.S.A.). The NanoTek® nanoalumina is 99.5% $Al_2O_3$, Alfa Aesar 44932, 40-50 nm APS Powder, surface area of 32-40 $m^2$/g.

The dispersant used was an acrylic graft copolymer with non-ionic functional groups.

ORGANOSILICASOL™ colloidal silica grade MEK-ST_L was obtained from Nissan Chemical America Corporation (Houston, Texas, USA). This is colloidal silica mono-dispersed in methyl ethyl ketone. Silica is present at 30-31 wt% and the silica particle size is 40-50 nm.

Tungsten (VI) oxide nanopowder was obtained from Sigma-Aldrich Corporation (St. Louis, Missouri, USA). The tungsten (VI) oxide has a particle size of <100 nm (by transmission electron microscopy).

BYK®-320, a solution of a polyether modified methylalkylpolysiloxane copolymer that is used as a leveling additive with defoaming action, was obtained from BYK Additives and Instruments, a member of The ALTANA Group (Wesel, Germany).

BYK®-388, a solution of fluoro-modified polyacrylate-copolymer as a leveling additive was obtained from BYK Additives and Instruments, a member of The ALTANA Group (Wesel, Germany).

In Example 2 and Comparative Examples A, B, C, D, and E, Solvent A is a mixture of 50g MEK, 2g butyl acetate, 6g methyl amyl ketone, 6g n-butanol, 5g 2-ethyl hexyl acetate, 21 g propylene glycol monomethyl ether acetate, and 11g xylene.

In Examples 5 and 6, Solvent B is a mixture that is xylene (57 wt%), MEK (29 wt%), butyl acetate (8 wt%), and butanol (6 wt%).

In Example 15, Solvent C is a mixture that is xylene (41 wt%), MEK (29 wt%), butyl acetate (8 wt%), and butanol (22 wt%).

Examples 1-4 and Comparative Examples A-E illustrate the relationship of amine curing agent equivalent weight and solvent resistance.

EXAMPLE 1

Epoxy novolac D.E.N.™ 431 (22.5 g) was dissolved in 2.5 g of 9:1 xylene:butanol. To this was added 3.16 g of TETA dissolved in 0.8 g of 9:1 xylene:butanol, followed by tris-dimethylaminomethyl phenol (0.5 g), followed by 0.1 g Resiflow® LH 240 and 0.05g of a 80wt% solution Resiflow® -S in 9:1 xylene:butanol. This mixture was coated onto Mylar® sheet using a 10 mil (254 $\mu$m) drawdown bar to form a layer. The layer was cured by heating at 100°C for 1 hour, then 160°C for 4 hours. The solvent resistance was measured as described above and is presented in Table 1.

EXAMPLE 2

Epoxy novolac D.E.N.™ 431 was dissolved in Solvent A to form an 80 wt% solution. To a round bottom flask was charged the epoxy solution (18.8 g), followed by Resiflow® LH-240 (0.19 g) and Resiflow®-S (0.12 g). The mixture was stirred for 10 minutes. To this was added 5.21 g of an 80 wt% solution of Aradur® 355 in Solvent A, followed by

tris-dimethylaminomethyl phenol (0.5 g). The mixture was stirred at room temperature for 10 minutes. This mixture was coated onto Mylar® sheet using a 10 mil (254 μm) drawdown bar to form a layer. The layer was cured by heating at 100°C for 1 hour, then 160°C for 4 hours. The solvent resistance was measured as described above and is presented in Table 1.

EXAMPLE 3

An epoxy composition was prepared containing epoxy novolac D.E.N.™ 431 (100 g), triethylenetetramine (13.90 g), 2,4,6-tris(dimethylaminomethyl) phenol (6.29 g), Resiflow® LH-240 flow additive (0.36 g), dispersant (0.73 g), aluminum oxide (NanoTek® alumina, 23.33 g), xylene (25.96 g), BYK 320 (0.72 g) and butanol (2.88 g). The dispersant used was an acrylic graft copolymer with non-ionic functional groups. The composition was coated onto Mylar® sheet using a 10 mil (254 μm) drawdown bar to form a layer. The layer was cured by heating at 100°C for 1 hour, then 160°C for 1 hour. The solvent resistance was measured as described above and is presented in Table 1.

COMPARATIVE EXAMPLE A

Epoxy novolac D.E.N.™ 431 was dissolved in Solvent A to form an 80 wt% solution. In a round bottom flask was charged the epoxy novolac solution (10 g), followed by Epikure™ 3010 polyamidoamine (4.26 g), tris-dimethylaminomethyl phenol (0.5 g), and Resiflow® LH-240 (0.3 g). The mixture was stirred for 10 minutes. This mixture was coated onto Mylar® sheet using a 10 mil (254 μm) drawdown bar to form a layer. The layer was cured by heating at 100°C for 1 hour, then 160°C for 4 hours. The solvent resistance was measured as described above and is presented in Table 1.

COMPARATIVE EXAMPLE B

Epoxy novolac D.E.N.™ 431was dissolved in Solvent A to form an 80 wt% solution. In a round bottom flask was charged the epoxy novolac solution (10 g), followed by Epikure™ 3072 (2.98 g), tris-dimethylaminomethyl phenol (0.5 g), and Resiflow® LH-240 (0.2 g). The mixture was stirred for 10 minutes, and then coated onto Mylar® sheet using a 10 mil (254 μm) drawdown bar to form a layer. The layer was cured at 100°C for 1 hour, then 160°C for 4 hours. The solvent resistance was measured as described above and is presented in Table 1.

COMPARATIVE EXAMPLE C

Epoxy novolac D.E.N.™ 431 was dissolved in Solvent A to form an 80 wt% solution. In a round bottom flask was charged the epoxy novolac solution (10 g), followed by Epikure™ 3140 (4.36 g), tris-dimethylaminomethyl phenol (0.5 g), and Resiflow® LH-240 (0.3 g). Epikure™ 3140 is a low viscosity polyamide resin based on dimerized fatty acid and polyamines. The mixture was stirred for 10 minutes. This mixture was coated onto Mylar® sheet using a 10 mil (254 μm) drawdown bar to form a layer. The layer was cured by heating at 100°C for 1 hour, then 160°C for 4 hours. The solvent resistance was measured as described above and is presented in Table 1.

COMPARATIVE EXAMPLE D

Epoxy novolac D.E.N.™ 431 was dissolved in Solvent A to form an 80 wt% solution. In a round bottom flask was charged the epoxy novolac solution (10 g), followed by Epikure™ 3175 (4.72 g), tris-dimethylaminomethyl phenol (0.5 g), and Resiflow® LH-240 (0.3 g). Epikure™ 3175 is a modified polyamide resin based curing agent. The mixture was stirred for 10 minutes. This mixture was coated onto Mylar® sheet using a 10 mil (254 μm) drawdown bar to form a layer. The layer was cured by heating at 100°C for 1 hour, then 160°C for 4 hours. The solvent resistance was measured as described above and is presented in Table 1.

COMPARATIVE EXAMPLE

Epoxy novolac D.E.N.™ 431 was dissolved in Solvent A to form an 80 wt% solution. In a round bottom flask was charged the epoxy novolac solution (10 g), followed by Epikure™ 3274 (3.49 g), tris-dimethylaminomethyl phenol (0.5 g), and Resiflow® LH-240 (0.2 g). Epikure™ 3274 is an aliphatic amine curing agent. The mixture was stirred for 10 minutes. This mixture was coated onto Mylar® sheet using a 10 mil (254 μm) drawdown bar to form a layer. The layer was cured by heating at 100°C for 1 hour, then 160°C for 4 hours. The solvent resistance was measured as described above and is presented in Table 1.

EXAMPLE 4

Epoxy cresol novolac Araldite® ECN 1273 was dissolved in 9:1 xylene:butanol to form an 80 wt% solution. In a round bottom flask was charged the epoxy cresol novolac solution (18.8 g), followed by 2.09 g triethylenetetramine solution (80 wt% in 9:1 xylene:butanol), 2.5 g tris-dimethylaminomethyl phenol solution (80 wt% in 9:1 xylene:butanol), and Resiflow® S (0.2 g). The mixture was stirred for 5 minutes. This mixture was coated onto Mylar® sheet using a 10 mil (254 μm) drawdown bar to form a layer. The layer was cured by heating at 100°C for 1 hour, then 160°C for 1 hour. The solvent resistance was measured as described above and is presented in Table 1.

EXAMPLE 5

Epoxy novolac D.E.N. 431 and Epon 828 Resin (DGEBPA) were respectively dissolved in Solvent B to form an 80 wt% solution. In a round bottom flask was charged the epoxy novolac solution (6.4 g), DGEBPA solution (1.6 g), followed by 0.89 g triethylenetetramine, 0.22 g tris-dimethylaminomethyl phenol. The mixture was stirred for 5 minutes. This mixture was coated onto Mylar® sheet using a 10 mil (254 μm) drawdown bar to form a layer. The layer was cured by heating at 100°C for 1 hour, then 160°C for 1 hour. The solvent resistance was measured as described above and is presented in Table 1.

EXAMPLE 6

Epoxy novolac D.E.N. 431 and Epon 862 (DGEBPF) were respectively dissolved in Solvent B to form an 80 wt% solution. In a round bottom flask was charged the epoxy novolac solution (6.4 g), DGEBPF solution (1.6 g), followed by 0.90 g triethylenetetramine, 0.22 g tris-dimethylaminomethyl phenol. The mixture was stirred for 5 minutes. This mixture was coated onto Mylar® sheet using a 10 mil (254 μm) drawdown bar to form a layer. The layer was cured by heating at 100°C for 1 hour, then 160°C for 1 hour. The solvent resistance was measured as described above and is presented in Table 1.

Table 1 summarizes the solvent resistance measurements of the resins in Examples 1-6 and Comparative Examples A-E, showing the relationship between the amine curing agent equivalent weight and cured resin solvent resistance.

Table 1

| Example | Epoxy Novolac Resin | Amine curing agent | Amine curing agent Equiv. Weight (g/equiv) | Wt% epoxy novolac (& epoxy)# in the cured resin | Solvent resistance (Wt% gain after 7 days in solvent) | | |
|---|---|---|---|---|---|---|---|
| | | | | | MEK | Ethyl acetate | Toluene |
| 1 | D.E.N™431 | TETA | 24.5 | 91 | 0 | 0 | 0 |
| 2 | D.E.N™431 | Aradur® 355 (cycloaliphatic amine) | 49 | 75 | 0 | 0 | 0 |
| 3 | D.E.N™431 | TETA | 24.5 | 69* | 2 | 2 | 1 |
| 4 | ECN 1273# | TETA | 24.5 | 80 | 5 | 3 | 1 |
| 5 | D.E.N.™431/ EPON™ 828 (80:20) | TETA | 24.5 | 85 | 2 | 1 | 2 |
| 6 | D.E.N.™431/ EPON™ 862 (80:20) | TETA | 24.5 | 85 | 0 | 0 | 0 |
| A(Comparative) | D.E.N.™431 | Epikure™3010 (polyamido-amine) | 95 | 62 | 20 | 16 | 20 |

(continued)

| Example | Epoxy Novolac Resin | Amine curing agent | Amine curing agent Equiv. Weight (g/ equiv) | Wt% epoxy novolac (& epoxy)# in the cured resin | Solvent resistance (Wt% gain after 7 days in solvent) | | |
|---|---|---|---|---|---|---|---|
| | | | | | MEK | Ethyl acetate | Toluene |
| B(Comparative) | D.E.N.™431 | Epikure™3072 (amidoamine) | 65 | 69 | 18 | 16 | 11 |
| C (Comparative) ) | D.E.N.™431 | Epikure™ 3140 (polyamide) | 95 | 62 | 19 | 17 | 13 |
| D (Comparative) ) | D.E.N.™431 | Epikure™ 3175 (modified polyamide) | 103 | 60 | 6 | 21 | 24 |
| E(Comparative) | D.E.N.™431 | Epikure™ 3274 (modified aliphatic amine) | 76 | 66 | ** | 23 | 22 |

#ECN 1273 is, more specifically, an epoxy cresol novolac with EEW 217-233.
*Resin contains 16 wt% alumina.
** Sample lost integrity

The results demonstrated that a cured layer of epoxy novolac resin compositions containing an amine curing agent having an amine equivalent weight of less than 60 g/equiv. were resistant to solvent attack. Methylethyl ketone, ethyl acetate, and toluene are conventional solvents used in inks for gravure printing.

EXAMPLE 7

This example presents a low-swelling epoxy novolac contatining 16 wt% nanoalumina that exhibits good engravability and wear.

A metal cylinder was heated to 40°C and an epoxy novolac resin composition was applied by brush coating onto the cylinder in a manner similar to that described in U. S. Patent 4,007,680. The epoxy composition was the same as in Example 3 and is detailed in Table 2. The solvent resistance of this formulation is good, as shown in Table 1, Example 3. After the desired coating thickness of about 8 mil (203 μm) had been achieved, the cylinder and the coating were heated at about 100°C for 1 hour and then about 150°C for 1 hour, thereby curing the coating. The cured composition layer on the cylinder was machined and polished, and then electromechanically engraved. The cured resin was electromechanically engraved to give 136 μm cell width with 9-13 μm cell wall, and resulted in about 6% cell breakout. The engraved cylinder was then subjected to wear testing as described above. The cell area of the engraved cylinder was measured to monitor the extent of wear. After 300,000 revolutions, the nanoalumina-filled epoxy exhibited cell area reduction of 4%.

Table 2

| Components | Grams | wt % | wt % of cured resin |
|---|---|---|---|
| D.E.N.™ 431 | 100.00 | 57.4 | 68.8 |
| Xylene | 25.96 | 14.9 | |
| Nanoalumina | 23.33 | 13.4 | 16.1 |
| TETA | 13.90 | 8.0 | 9.6 |
| tris(dimethylaminomethyl)phenol | 6.29 | 3.6 | 4.3 |
| Butanol | 2.88 | 1.7 | |

(continued)

| Components | Grams | wt % | wt % of cured resin |
|---|---|---|---|
| dispersant | 0.73 | 0.4 | 0.5 |
| BYK® 320 | 0.72 | 0.4 | 0.5 |
| Resiflow® LH-240 | 0.36 | 0.2 | 0.3 |

EXAMPLE 8

This example presents a low-swelling epoxy novolac that exhibits good long-run print trial performance.

A metal cylinder was coated with the epoxy novolac resin composition of Example 7. The cylinder was coated by brush technique using a double syringe and translator to deliver material to obtain desired coating thickness. After the desired coating thickness of about 8 mil (203 μm) had been achieved, the cylinder and the coating were heated at about 100°C for 1 hour and then about 120°C for 1 hour, thereby curing the resin. The cured layer on the cylinder was then machined and polished. The layer was then electromechanically engraved on an Ohio R-7100 series engraver at cell rate of 3200 Hz, (corresponding to 200 Ipi (79 I/cm) for 100% engraving) with a 120 degree diamond stylus. The engraved cylinder was then used for printing with toluene-based cyan ink on C1S paper. After about 400,000 revolutions, the print quality was as good as the initial print.

COMPARATIVE EXAMPLE F

This comparative example presents an epoxy that exhibits excellent engravability but has poor solvent resistance and exhibits poor wear and poor print quality after a short run length.

In an 8 oz (0.24 L) jar, 1.43 g of tungsten oxide nanopowder (particle size <100 nm) was pre-dispersed in 8.57 g Insulcast 504 (clear) using a handheld homogenizer for 5 minutes then placed on a roller mill for 2 weeks. The resulting suspension was then combined with 10 g Insulcast 504 BLK (bisphenol A epoxy) in a 4 oz (0.12 L) jar and placed on roller mill for 1 h. The resulting mixture was degassed under vacuum to remove air bubbles, and 2.8 g of Insulcure 9 was added. The resulting mixture was stirred well on a magnetic stirrer for about 15-30 minutes and degassed under vacuum. The resulting mixture was then coated on a preheated metal cylinder at 40°C to obtain a film of 11.4-12.5 mil (290-318 μm) thickness. It was then cured at 80-90°C for 2 h and allowed to cool to ambient temperature gradually.

The cylinder was coated by brush technique using a double syringe and a translator mechanism to deliver material to obtain desired coating thickness. The metal syringe was cooled with a bag of ice to prevent polymerization in the syringe due to exotherm.

The cured layer of the curable composition on the cylinder was then engraved on an Ohio R-71 00 series engraver at a cell rate 3200 Hz, with horizontal screen setting 80 lines per centimeter, a screen angle of 60 degrees at 100% tone, and using a diamond stylus at a face angle of 120 degrees.

Results:

Solvent resistance was determined as described above. Results are shown below:

| Solvent | Weight increase after 7 days (wt%) |
|---|---|
| MEK | 21 |
| Isopropanol | 10.3 |
| Ethyl acetate | 8 |
| Butyl acetate | 6.4 |
| Toluene | 5.7 |

Engraving quality was excellent, with <<1% broken cell walls at 100% cell density

Wear Resistance: 4% printable area reduction

Printing Quality: print quality became poor after about 40,000 revolutions because of poor solvent resistance (printing with toluene based ink).

COMPARATIVE EXAMPLE G

This example presents a solvent resistant (low-swelling) epoxy novolac composition (homopolymerized and cured with imidazole catalyst) with poor engravability.

A metal cylinder was heated to 40°C and an epoxy composition was coated onto the cylinder. The epoxy composition contained a mixture of epoxy novolac D.E.N.™ 431 (85 wt% solution in solvent B, 43.2g) and 2-ethyl 4-methyl imidazole (3.65g). After the desired coating thickness of about 8 mil (203 μm) had been achieved, the cylinder and the coating were heated at 100°C for 2 hour and then at about 160°C for 2 hour. The cured composition layer on the cylinder was then machined and polished, and then electromechanically engraved to provide 110 μm cell width with 19 μm cell wall, and resulted in about 26% cell breakout.

The solvent resistance of this composition was measured as above, and the results are shown below:

| Solvent | Weight increase after 7 days (wt%) |
|---|---|
| MEK | 0.8 |
| Ethyl acetate | 1 |
| Toluene | 0 |

EXAMPLE 9

This example presents a solvent resistant (low-swelling), unfilled epoxy novolac that exhibits good engravability and wear. The solvent resistance of this formulation is shown in Table 1, Example 1.

A metal cylinder was heated to 40°C and an epoxy composition (Table 3) was applied on the cylinder. The epoxy composition was the same as in Example 1. After the desired coating thickness of about 8 mil (203 μm) had been achieved, the cylinder and the coating were heated at about 100°C for 1 hour and then about 150°C for 1 hour, thereby curing the resin. The cured composition layer on the cylinder was machined and polished, and then electromechanically engraved to provide 119 μm cell width with 15-16 μm cell wall, and resulted in about 2% cell breakout. The engraved cylinder was then subjected to wear testing as described above. After 300,000 revolutions, the epoxy coating exhibited cell area reduction of 5%.

Table 3

| Components | Grams | wt % of cured resin |
|---|---|---|
| D.E.N.™ 431 | 21.00 | 84.8 |
| Xylene | 3.37 | |
| TETA | 2.95 | 11.9 |
| 2,4,6-tris(dimethylaminomethyl) Phenol | 0.60 | 2.4 |
| Butanol | 0.38 | |
| Resiflow® LH-240 | 0.12 | 0.5 |
| Resiflow® S | 0.10 | 0.4 |

EXAMPLE 10

This example presents a solvent resistant (low-swelling) epoxy novolac with about 1.8 wt% nanoalumina that exhibits good engravability and wear.

A metal cylinder was heated to 40°C and an epoxy composition is applied on the cylinder. The epoxy composition was comprised of D.E.N.™ 431 epoxy novolac, triethylenetetramine, 2,4,6-tris(dimethylaminomethyl)phenol, flow additive, dispersant , aluminum oxide (NanoTek®), xylene, and butanol (see Table 4). The dispersant used was an acrylic graft copolymer with non-ionic functional group. After the desired coating thickness of about 8 mil (203 μm) had been achieved, the cylinder and the coating were heated at about 100°C for 1 hour and then about 150°C for 1 hour. The cured composition layer on the cylinder was machined and polished, and then electromechanically engraved to give 120 μm cell width with 16-20 μm cell wall, and resulted in <1% cell breakout. The engraved cylinder was then subjected to wear testing as described above. After 300,000 revolutions, the nanoalumina filled epoxy exhibited cell area reduction of 3%.

Table 4

| Components | Grams | wt% | wt % of cured res in |
|---|---|---|---|
| D.E.N.™ 431 | 26.61 | 78.6 | 85.44 |
| TETA | 3.54 | 10.5 | 11.37 |
| Xylene | 2.42 | 7.2 | |
| Nanoalumina | 0.55 | 1.6 | 1.76 |
| 2,4,6-tris(dimethylaminomethyl) phenol | 0.30 | 0.9 | 0.96 |
| Butanol | 0.27 | 0.8 | |
| Dispersant | 0.15 | 0.4 | 0.47 |

EXAMPLE 11

This example presents a solvent resistant (low-swelling) epoxy novolac prepared including a flexibilizing component that exhibits good engravability. The solvent resistance of a similar formulation is shown in Table 1, Example 2.

A metal cylinder was heated to 40°C and an epoxy composition was applied on the cylinder. The epoxy composition contained of epoxy novolac D.E.N.™ 431, Aradur® 355 cycloaliphatic amine curing agent, Aradur® 70BD polyetherurethane amine as a flexibilizing component, 2,4,6-tris(dimethylaminomethyl)phenol, flow additives, MEK, butyl acetate, butanol, propylene glycol monomethyl ether acetate (PGMEA) and xylene (see Table 5). After the desired coating thickness of about 8 mil (203 μm) had been achieved, the cylinder and the coating were heated at about 100°C for 1 hour and then at about 160°C for 1 hour. The cured composition layer on the cylinder was then machined and polished, and then electromechanically engraved to give 135 μm cell width with 11-13 μm cell wall, and resulted in <1% cell breakout.

Table 5

| Components | Grams | wt% of cured resin |
|---|---|---|
| D.E.N.™ 431 | 20 | 75.10 |
| Aradur® 355 | 5.56 | 20.88 |
| tris(dimethylaminomethyl)phenol | 0.5 | 1.88 |
| Aradur® 70BD | 0.25 | 0.94 |
| Resiflow® LH-240 | 0.16 | 0.60 |
| Resiflow® S | 0.16 | 0.60 |
| MEK | 1.4 | |
| butyl acetate | 0.37 | |
| Butanol | 1.1 | |
| propylene glycol monomethyl ether acetate | 0.17 | |
| Xylene | 1.98 | |

EXAMPLE 12

This example presents a solvent resistant (low-swelling) epoxy novolac containing about 25 wt% silica nanoparticles that shows good engravabil ity.

A metal cylinder was heated to 40°C and an epoxy composition was coated onto the cylinder. The epoxy composition contained epoxy novolac D.E.N.™ 431, Aradur® 355, silica nanoparticles (MEK-ST_L), 2,4,6-tris(dimethylaminomethyl)phenol, flow additives, MEK, butyl acetate, methyl amyl ketone, butanol, 2-ethyl hexyl acetate, propylene glycol monomethyl ether acetate (PGMEA) and xylene (see Table 6). After the desired coating thickness of about 8 mil (203 μm) had been achieved, the cylinder and the coating were heated at about 100°C for 1 hour and then at about 160°C for 1 hour. The cured composition layer on the cylinder was machined and polished, and then electromechanically engraved to give 135 μm cell width with 15-16 μm cell wall, and resulted in about 11 % cell breakout.

Table 6

| Components | Grams | wt% of cured resin |
|---|---|---|
| D.E.N.™ 431 | 24.5 | 56.84 |
| Aradur® 355 | 7.02 | 16.29 |
| tris-dimethylaminomethyl phenol | 0.6 | 1.40 |
| Silica nanoparticles | 10.6 | 24.60 |
| Resiflow® LH-240 | 0.38 | 0.89 |
| MEK | 9.5 | |
| butyl acetate | 0.4 | |
| Butanol | 1.1 | |
| methyl amyl ketone | 1.1 | |
| 2-ethyl hexyl acetate | 1 | |
| propylene glycol monomethyl ether acetate | 4 | |
| Xylene | 2.1 | |

EXAMPLE 13

This example presents a solvent resistant (low-swelling) epoxy novolac containing about 16 wt% silica nanoparticles that shows good engravability and wear.

A metal cylinder was heated to 40°C and an epoxy composition was coated onto the cylinder. The epoxy composition contained epoxy novolac D.E.N.™ 431, TETA, silica nanoparticles (ORGANOSILICASOL™ colloidal silica grade MEK-ST_L), 2,4,6-tris(dimethylaminomethyl)phenol, flow additives, MEK, butyl acetate, butanol, and xylenes (see Table 7). After the desired coating thickness of about 8 mil had been achieved, the cylinder and the coating were heated at about 100°C for 1 hour and then about 160°C for 1 hour, thereby curing the resin. The cured composition layer on the cylinder was machined and polished, and then electromechanically engraved to give 119 μm cell width with 22 μm cell wall, and resulted in <1 % cell breakout. The engraved cylinder was then subjected to wear testing as described above. After 300,000 revolutions, the nanoalumina filled epoxy exhibited cell area reduction of 9%.

Table 7

| Components | Grams | wt% of cured resin |
|---|---|---|
| D.E.N.™ 431 | 23.2 | 72.21 |
| TETA | 3.16 | 9.84 |
| Tris(dimethylaminomethyl)phenol | 0.6 | 1.87 |
| MEK-ST_L silica nanoparticles | 5.1 | 15.87 |
| Resiflow® LH-240 | 0.07 | 0.22 |
| BYK®-320 | 0.13 | 0.40 |
| MEK | 1.8 | |
| butyl acetate | 0.48 | |
| Butanol | 0.36 | |
| Xylene | 3.6 | |

EXAMPLE 14

This example presents an epoxy novolac composition with epoxy-reactive diluents that exhibits good solvent resistance and engravability.

Epoxy novolac D.E.N. 431 (10 g), Araldite® DY-N (2 g), and 1,4-butane diglycidyl ether (1.2 g) were mixed until homogeneous. To this was added TETA (1.99 g) and 0.2 g tris-dimethylaminomethyl phenol. The mixture was

stirred for 5 minutes. This mixture was coated onto Mylar® sheet using a 10 mil (254 μm) drawdown bar to form a layer. The layer was cured by heating at 100°C for 1 hour, then 160°C for 1 hour. The solvent uptake after 7 days immersed in the specified solvent was: 1% in MEK, 1% in toluene, and 1% in ethyl acetate.

The same composition was coated onto a cylinder as described in Example 7. After coating, a layer of the composition had thickness of about 8 mil (203 μm), and the cylinder and the coating were heated at about 100°C for 1 hour thereby curing the coating layer on the cylinder. The cured composition layer on the cylinder was ground and polished. The layer was then electromechanically engraved to provide 126 μm cell width with 16 μm cell wall, and resulted in about 5% cell breakout.

EXAMPLE 15

This example presents an epoxy novolac blended with 4-glycidyloxy-N,N-diglycidylaniline (which is available commercially as Araidite®MY0510) with epoxy-reactive diluents that exhibits good solvent resistance.

Epoxy novolac D.E.N. 431 (5.6g) was dissolved in 1.4g of solvent C. To this was added Araldite®MY501 (0.6g) and 1,4-butaneglycidyl ether (2.4g). The mixture was stirred until homogeneous. To this was added TETA (1.4 g) and 0.1 g tris-dimethylaminomethyl phenol. The mixture was stirred for 5 minutes. This mixture was coated onto Mylar® sheet using a 10 mil (254 μm) drawdown bar to form a layer. The layer was cured by heating at 100°C for 1 hour, then 160°C for 1 hour. The solvent uptake after 7 days immersed in the specified solvent was: 4% in MEK, and 1% in toluene,

Table 8 summarizes the results of the Examples and Comparative Examples. "Yes" or "No" indicates whether the property requirement was or was not met.

Table 8

| **Example** | **Engravability on cylinder** (175-200 lpi with <15% breakout) | **Solvent Resistance** (<10% wt gain in solvents#) | **Wear** (<10% as measured by the in-house test method) | **Print Quality in a long run** (>100,000 impressions) |
|---|---|---|---|---|
| Examples 1, 9 (same composition) | Yes | Yes | Yes (Ex. 9) | Yes. |
| Example 2 | Yes | Yes | n. d. | n. d. |
| Examples 3, 7, 8 (same composition) | Yes | Yes (Example 3) | Yes (Example 7) | Yes (Example 8) |
| Example 4 | n. d. | Yes | n. d. | n. d. |
| Example 5 | n. d. | Yes | | |
| Example 6 | n. d. | Yes | | |
| Example 10 | Yes | Yes | Yes | Yes[a] |
| Example 11 | Yes | Yes | n. d. | n. d. |
| Example 12 | Yes | Yes | n. d. | n. d. |
| Example 13 | Yes | Yes | Yes | n. d. |
| Example 14 | Yes | Yes | n.d. | n.d. |
| Example 15 | n.d. | Yes | n.d. | n.d. |
| Comparative Example A | n. d. | No | n. d. | n. d. |
| Comparative Example B | n. d. | No | n. d. | n. d. |
| Comparative Example C | n. d. | No | n. d. | n. d. |
| Comparative Example D | n. d. | No | n. d. | n. d. |

(continued)

| Example | Engravability on cylinder (175-200 lpi with <15% breakout) | Solvent Resistance (<10% wt gain in solvents#) | Wear (<10% as measured by the in-house test method) | Print Quality in a long run (>100,000 impressions) |
|---|---|---|---|---|
| Comparative Example E | n. d. | No | n. d. | n. d. |
| Comparative Example F | Yes | No | Yes | No* |
| Comparative Example G | No | Yes | n.d. | n.d. |

n. d. = "not determined"
*The wear test sample was cured at room temperature and the print quality sample was cured at 70°C.
#Solvents include ethyl acetate, MEK, and toluene.
[a]The long print run was performed with similar compositions (with same resin and nanoparticle compositions and minor changes to the flow additives and level of catalyst). The ink used was silver ink manufactured by Siegwerk Druckfarben AG & Co. KgaA, (Siegburg, Germany).

Preferred embodiments

1. A process for preparing a printing form comprising:

a) providing a curable composition comprising

i) at least one epoxy novolac resin having an epoxide equivalent weight of 156 to 300 g/equivalent, and

ii) an amine curing agent selected from primary amines and secondary amines, the agent having an amine equivalent weight of less than or equal to 60 g/equivaient;

b) applying the curable composition onto a supporting substrate, thereby forming a layer;

c) curing the layer at one or more temperatures in a range of room temperature to 250°C; and

d) engraving at least one cell in the layer resulting from step c).

2. The process of Embodiment 1 wherein curing of the layer occurs at room temperature.

3. The process of Embodiment 1 wherein curing the layer comprises heating the layer at one temperature in the range, or heating the layer to a first temperature in the range and to a second temperature in the range.

4. The process of Embodiment 1 wherein the applying step is selected from spin coating, dip coating, slot coating, roller coating, extrusion coating, brush coating, ring coating, powder coating, or doctor blade coating.

5. The process of Embodiment 1 further comprising prior to the applying step, preheating the supporting substrate to a temperature from room temperature to 40°C.

6. The process of Embodiment 1 further comprising after the curing step, grinding the layer to have a thickness from 50.8 to 7620 μm.

7. The process of Embodiment 1 wherein engraving is selected from electromechanical engraving or laser engraving.

8. The process of Embodiment 1 further comprising after the engraving step conducting an additional step selected from polishing an exterior surface of the layer, or applying a coating of a fluoropolymeric composition on the layer.

9. The process of Embodiment 1 wherein the amine equivalent weight of the amine curing agent is 20 to 60 g/equivalent, and is selected from the group consisting of: aliphatic amines, aliphatic polyamides, modified aliphatic polyamines, cycloaliphatic amines, modified cycloaliphatic amines, aromatic amines, arylyl amines, and mixtures thereof.

10. The process of Embodiment 1 wherein the amine curing agent is selected from the group consisting of: triethylenetetramine, diethylenetriamine, tetraethylenepentamine; isophorone diamine, 1-(2-aminoethyl)piperazine, 1,2-diaminocyclohexane, bis(4-aminocyclohexyl)methane) and other cycloaliphatic amines; m-phenylenediamine, 4,4'-diaminodiphenylmethane, 4,4'-diaminodiphenyl sulfone, diethyltoluenediamine; m-xylylene diamine, 1,3-bis(aminomethyl cyclohexane), and mixtures of these.

11. The process of Embodiment 1 wherein the curable composition further comprises one or more epoxy-reactive diluents.

12. The process of Embodiment 11 wherein the epoxy-reactive diluent is selected from the group consisting of: p-tertiarybutyl phenol glycidyl ether, cresyl glycidyl ether, 2-ethylhexyl glycidyl ether, $C_8$-$C_{14}$ glycidyl ether, 1,4-butanediol diglycidyl ether, neopentyl glycol diglycidyl ether, cyclohexane dimethanol diglycidyl ether, trimethylol propane triglycidyl ether, 4-glycidyloxy-N,N-diglycidylaniline, and N,N,N',N'-tetraglycidyl-4,4'-methlene-bis-benzenamine.

13. The process of Embodiment 11 wherein the epoxy-reactive diluent is a monofunctional diluent and is present at up to 20 wt%, based on the combined weight of the components of the curable composition.

14. The process of Embodiment 11 wherein the epoxy-reactive diluent is a mixture of diluents and the mixture is present at up to 40 wt%, based on the combined weight of the components of the curable composition.

15. The process of Embodiment 1 wherein the curable composition further comprises a second epoxy resin, wherein the second epoxy resin is not an epoxy novolac resin, wherein the at least one epoxy novolac resin is present at at least 50 wt% based on the combined weights of the at least one epoxy novolac and the second epoxy resin.

16. The process of Embodiment 15 wherein the second epoxy resin is bisphenol A diglycidyl ether, oligomers of bisphenol A diglycidyl ether, bisphenol F diglycidyl ether, oligomers of bisphenol F diglycidyl ether, or a mixture of any of these.

17. The process of Embodiment 1 wherein the curable composition further comprises up to 50 wt% nanoparticles, based on the combined weight of the components of the curable composition, having at least one dimension less than 500 nm.

18. The process of Embodiment 17 wherein the nanoparticles have at least one dimension less than 100 nm.

19. The process of Embodiment 17 wherein the nanoparticles comprise at least one member of the group consisting of: aluminum oxides, colloidal silica, fumed silica, zinc oxide, zirconium oxide, titanium oxide, tungsten oxides, magnesium oxides, tungsten carbides, silicon carbide, titanium carbide, boron nitrides, molybdenum disulfide, clay, carbon nanotubes, carbon black, carbon filaments, and mixtures thereof.

20. The process of Embodiment 19 wherein the clay is at least one member of the group consisting of: laponite, bentonite, montmorillonite, hectorite, kaolinite, dickite, nacrite, halloysite, saponite, nontronite, beidellite, volhonskoite, sauconite, magadite, medmonite, kenyaite, vermiculite, serpentines, attapulgite, kulkeite, alletite, sepiolite, allophane, imogolite, and mixtures thereof.

21. The process of Embodiment 1 wherein the supporting substrate is in the form of a cylinder or sheet.

22. The process of Embodiment 1 wherein the epoxy novolac resin has a molecular weight of 312 to 1500 and an epoxide equivalent weight of 156 to 200 g/equivalent; and the amine curing agent is triethylenetetramine, diethylenetriamine, or a cycloaliphatic amine.

23. The process of Embodiment 22 wherein the curable composition further comprises up to 20 wt% alumina nanoparticles or silica nanopartices, based on the combined weight of the components of the curable composition.

24. The process of Embodiment 1 wherein the epoxy novolac resin has a molecular weight of 312 to 1500 and the epoxide equivalent weight between 156 and 200 g/equivalent; the amine curing agent has the amine equivalent weight of 20 to 60 g/equivalent; and the composition further comprising a catalyst selected from imidazoles, tris (dimethylaminomethyl) phenol, or nonyl phenol.

25. The process of Embodiment 1 wherein the epoxy novolac resin has a molecular weight of 312 to 1500 and the epoxide equivalent weight between 156 and 200 g/equivaient; the amine curing agent has the amine equivalent weight of 20 to 60 g/equivalent; and the curable composition further comprising up to 30 wt% nanoparticles based on the combined weight of the components of the curable composition having at least one dimension less than 500 nm, and selected from aluminum oxides, colloidal silica, fumed silica, zinc oxide, zirconium oxide, titanium oxide, tungsten oxides, magnesium oxides, tungsten carbides, silicon carbide, titanium carbide, boron nitrides, molybdenum disulfide, clay, carbon nanotubes, carbon black, carbon filaments, or mixtures thereof.

26. The process of Embodiment 1 wherein the curable composition further comprises one or more leveling additives selected from acrylic polymers, poly(dimethylsiloxane), methylalkylpolysiloxane copolymers, fluoro-modified acrylates, and fluoro-modified polyacrylates.

27. The process of Embodiment 26 wherein the leveling additiive is present at up to 10 wt%, based on the combined weight of the components of the curable composition.

28. The process of Embodiment 1 wherein the epoxy novolac resin is in an amount from 40 to 90 wt% and has the epoxide equivalent weight between 156 and 200 g/equivalent; the amine curing agent has the amine equivalent weight of 20 to 60 g/equivalent; and the curable composition further comprising nanoparticles at up to 30 wt%, at least one epoxy reactive diluent at up to 40 wt%, a catalyst at up to 10 wt%, a flexibilizing component at up to 15 wt%, a leveling additive at up to 10 wt%, and a dispersant at up to 10 wt%, based on the combined weight of the components present in the curable composition

29. A process for printing with a printing form comprising:

a) preparing the printing form having at least one engraved cell in a cured layer of the curable composition according to the process of Embodiment 1;

b) applying a solvent ink to the at least one cell; and

c) transferring ink from the cell to a printable substrate, wherein the cured layer swells $\leq$ 10% based on weight of the layer.

30. A printing form comprising a continuous print surface adjacent a supporting substrate, wherein the continuous print surface is a cured epoxy composition prepared from a curable composition comprising:

i) at least one epoxy novolac resin having an epoxide equivalent weight of 156 to 300 g/equivalent, and

ii) an amine curing agent selected from primary amines and secondary amines, the agent having an amine equivalent weight of less than or equal to 60 g/equivaient.

31. The printing form of Embodiment 30 wherein the curable composition comprises at least one epoxy novolac resin having an epoxide equivalent weight of 156 to 200 g/equivalent; and the amine curing agent is triethylenetetramine, diethylenetriamine, or a cycloaliphatic amine.

32. The printing form of Embodiment 30 wherein the curable composition further comprises up to 50 wt% nanoparticles, based on the combined weight of the components of the curable composition.

33. The printing form of Embodiment 30 wherein the curable composition comprises up to 20 wt% alumina nanoparticles or silica nanopartices, based on the combined weight of the components of the curable composition.

34. The printing form of Embodiment 30 wherein the curable compostion further comprises bisphenol F diglycidyl ether or bisphenol A diglycidyl ether.

35. The printing form of Embodiment 30 wherein the printing form is in the shape of a cylinder or plate.

36. The printing form of Embodiment 30 wherein the substrate is metal or a polymer.

37. The printing form of Embodiment 30 wherein the curable composition further comprises up to 10 wt% catalyst, based on the combined weight of the components of the curable composition.

38. The printing form of Embodiment 30 wherein the curable composition further comprises up to 40 wt% epoxy-reactive diluent, based on the combined weight of the components of the curable composition.

39. The printing form of Embodiment 30 wherein the curable composition further comprises a leveling additive at up to 10 wt%, based on the combined weight of the components of the curable composition.

40. The printing form of Embodiment 30 wherein the curable composition comprises the at least one epoxy novolac resin in an amount from 50 to 90 wt%, the amine curing agent in an amount from 5 to 25 wt%, a second epoxy resin in an amount from 0 to 40 wt%, a catalyst in an amount from 0 to 10 wt%, one or more reactive diluents in an amount from 0 to 40 wt%, nanoparticles in an amount from 0 to 50 wt%, a resin modifier in an amount from 0 to 10 wt%, a flexibilizing component in an amount from 0 to 15 wt%, and a leveling additive at an amount from 0 to 10 wt%, wherein each wt% is based on the combined weight of the components present in the curable composition.

## Claims

**1.** A process for preparing a printing form comprising:

a) providing a curable composition comprising

i) at least one epoxy novolac resin having an epoxide equivalent weight of 156 to 300 g/equivalent, and
ii) an amine curing agent selected from primary amines and secondary amines, the agent having an amine equivalent weight of less than or equal to 60 g/equivalent;

b) applying the curable composition onto a supporting substrate, thereby forming a layer;
c) curing the layer at one or more temperatures in a range of room temperature to 250°C; and
d) engraving at least one cell in the layer resulting from step c).

**2.** The process of Claim 1 wherein the amine equivalent weight of the amine curing agent is 20 to 60 g/equivalent, and is selected from the group consisting of: aliphatic amines, aliphatic polyamides, modified aliphatic polyamines, cycloaliphatic amines, modified cycloaliphatic amines, aromatic amines, arylyl amines, and mixtures thereof.

**3.** The process of Claim 1 wherein the curable composition further comprises one or more epoxy-reactive diluents.

**4.** The process of Claim 11 wherein the epoxy-reactive diluent is a monofunctional diluent and is present at up to 20 wt%, based on the combined weight of the components of the curable composition.

**5.** The process of Claim 11 wherein the epoxy-reactive diluent is a mixture of diluents and the mixture is present at up to 40 wt%, based on the combined weight of the components of the curable composition.

**6.** The process of Claim 1 wherein the curable composition further comprises a second epoxy resin, wherein the second epoxy resin is not an epoxy novolac resin, wherein the at least one epoxy novolac resin is present at at least 50 wt% based on the combined weights of the at least one epoxy novolac and the second epoxy resin.

**7.** The process of Claim 1 wherein the curable composition further comprises up to 50 wt% nanoparticles, based on the combined weight of the components of the curable composition, having at least one dimension less than 500 nm.

**8.** The process of Claim 1 wherein the epoxy novolac resin has a molecular weight of 312 to 1500 and an epoxide equivalent weight of 156 to 200 g/equivalent; and the amine curing agent is triethylenetetramine, diethylenetriamine, or a cycloaliphatic amine.

**9.** The process of Claim 1 wherein the epoxy novolac resin has a molecular weight of 312 to 1500 and the epoxide equivalent weight between 156 and 200 g/equivalent; the amine curing agent has the amine equivalent weight of 20 to 60 g/equivalent; and the composition further comprising a catalyst selected from imidazoles, tris(dimethylaminomethyl) phenol, or nonyl phenol.

**10.** The process of Claim 1 wherein the curable composition further comprises one or more leveling additives selected from acrylic polymers, poly(dimethylsiloxane), methylalkylpolysiloxane copolymers, fluoro-modified acrylates, and fluoro-modified polyacrylates.

**11.** The process of Claim 10 wherein the leveling additiive is present at up to 10 wt%, based on the combined weight of the components of the curable composition.

**12.** The process of Claim 1 wherein the epoxy novolac resin is in an amount from 40 to 90 wt% and has the epoxide equivalent weight between 156 and 200 g/equivalent; the amine curing agent has the amine equivalent weight of 20 to 60 g/equivalent; and the curable composition further comprising nanoparticles at up to 30 wt%, at least one epoxy reactive diluent at up to 40 wt%, a catalyst at up to 10 wt%, a flexibilizing component at up to 15 wt%, a leveling additive at up to 10 wt%, and a dispersant at up to 10 wt%, based on the combined weight of the components present in the curable composition

**13.** A process for printing with a printing form comprising:

a) preparing the printing form having at least one engraved cell in a cured layer of the curable composition according to the process of Claim 1;
b) applying a solvent ink to the at least one cell; and
c) transferring ink from the cell to a printable substrate, wherein the cured layer swells ≤ 10% based on weight of the layer.

**14.** A printing form comprising a continuous print surface adjacent a supporting substrate, wherein the continuous print surface is a cured epoxy composition prepared from a curable composition comprising:

i) at least one epoxy novolac resin having an epoxide equivalent weight of 156 to 300 g/equivalent, and
ii) an amine curing agent selected from primary amines and secondary amines, the agent having an amine equivalent weight of less than or equal to 60 g/equivalent.

**15.** The printing form of Claim 14 wherein the curable composition comprises at least one epoxy novolac resin having an epoxide equivalent weight of 156 to 200 g/equivalent; and the amine curing agent is triethylenetetramine, diethylenetriamine, or a cycloaliphatic amine.

**16.** The printing form of Claim 14 wherein the curable composition further comprises up to 50 wt% nanoparticles, based on the combined weight of the components of the curable composition.

**17.** The printing form of Claim 14 wherein the curable composition further comprises up to 40 wt% epoxy-reactive diluent, based on the combined weight of the components of the curable composition.

**18.** The printing form of Claim 14 wherein the curable composition further comprises a leveling additive at up to 10 wt%, based on the combined weight of the components of the curable composition.

**19.** The printing form of Claim 14 wherein the curable composition comprises the at least one epoxy novolac resin in an amount from 50 to 90 wt%, the amine curing agent in an amount from 5 to 25 wt%, a second epoxy resin in an amount from 0 to 40 wt%, a catalyst in an amount from 0 to 10 wt%, one or more reactive diluents in an amount from 0 to 40 wt%, nanoparticles in an amount from 0 to 50 wt%, a resin modifier in an amount from 0 to 10 wt%, a flexibilizing component in an amount from 0 to 15 wt%, and a leveling additive at an amount from 0 to 10 wt%, wherein each wt% is based on the combined weight of the components present in the curable composition.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5694852 A, Bressler
- US 20040221756 A, Campbell and Belser
- GB 2071574 A
- US 3684771 A
- US 3788996 A
- US 4070388 A
- US 4032698 A
- US 6472463 B
- GB 1544748 A
- US 4007680 A


### Non-patent literature cited in the description


- Epoxy Resins Chemistry and Technology. Marcel Dekker, In,
- Epoxy Resins. **HA. Q. PHAM ; MAURICE J. MARKS.** Encyclopedia of Polymer Science and Technology. John Wiley & Sons, 2004, 678-804
- Epoxy Resins Chemistry and Technology. Marcel Dekker, Inc
- **H. K. JAKUBAUSKAS.** Use of A-B Block Polymers as Dispersants For Non-aqueous Coating Systems. *Journal of Coating Technology,* vol. 58 (736), 71-82